# EUROPEAN PATENT APPLICATION

(11) **EP 4 325 701 A1**
(43) Date of publication of application: **21.02.2024**
(21) Application number: 22788185.1
(22) Date of filing: 13.04.2022
(51) Int. Cl.: H02K 15/02, H01F 41/02, H01F 1/147, H02K 1/02, H02K 1/18

(54) **ELECTROMAGNETIC STEEL SHEET AND ADHESION LAMINATED CORE PRODUCTION METHOD**

(30) Priority: 14.04.2021 JP 2021068106
(71) Applicant: NIPPON STEEL CORPORATION, Chiyoda-ku Tokyo 100-8071 (JP); Toagosei Co., Ltd., Minato-ku Tokyo 105-8419 (JP)
(72) Inventor: TAKEDA, Kazutoshi, Tokyo 100-8071 (JP); TAKATANI, Shinsuke, Tokyo 100-8071 (JP); HIRAYAMA, Ryu, Tokyo 100-8071 (JP); FUKUCHI, Minako, Tokyo 100-8071 (JP); IWASE, Yoshiaki, Nagoya-shi, Aichi 455-0026 (JP); NIWA, Makoto, Nagoya-shi, Aichi 455-0026 (JP); HIRAKAWA, Makoto, Nagoya-shi, Aichi 455-0026 (JP)
(74) Representative: Vossius & Partner Patentanwälte Rechtsanwälte mbB
(86) International application number: PCT/JP2022/017693
(87) International publication number: WO 2022/220262

(57) **Abstract**

This electrical steel sheet contains: as a chemical composition, in a unit of mass%, 2.5% to 3.9% of Si; 0.001% to 3.0% of Al; and 0.05% to 5.0% of Mn, the remainder being Fe and impurities, and, on one surface or both surfaces thereof, an insulating coating containing a curing accelerator is formed.

## Description

### [Technical Field of the Invention]

The present invention relates to an electrical steel sheet and a bonded and stacked core manufacturing method.

Priority is claimed on Japanese Patent Application No. 2021-068106, filed April 14, 2021, the content of which is incorporated herein by reference.

### [Related Art]

For example, a rotary electric machine used as an electric motor includes a stacked core. This stacked core is manufactured by punching a strip-shaped steel sheet into a predetermined shape a plurality of times while intermittently feeding the strip-shaped steel sheet, and stacking a plurality of the obtained steel sheet components. The steel sheet components are fixed to each other by welding, bonding, crimping, or the like, and among these, a fixing method by bonding has attracted attention from a viewpoint of effectively suppressing core loss of the stacked core.

For example, Patent Document 1 below discloses a method for manufacturing a metal sheet stacked body by sequentially performing a plurality of press workings on a hoop material with a press working oil applied to one surface or both surfaces thereof, applying an adhesive to one surface of the hoop material, then performing outer shape punching to obtain a metal sheet, and stacking and bonding a predetermined number of the metal sheets, in which a curing accelerator is added to the press working oil.

It is described that according to this method for manufacturing a metal sheet stacked body, the curing accelerator is added to the press working oil, and therefore bonding between the metal sheets is quickly and firmly performed without removing the press working oil, simplification of a manufacturing step, miniaturization of a die in a forward feed die device, and the like are possible, and improvement of product quality and productivity, miniaturization of manufacturing equipment, and the like are achieved.

In addition, Patent Document 2 below discloses a punching stacking press method for punching a steel sheet component having a predetermined shape from an intermittently fed strip-shaped steel sheet and stacking the steel sheet component, the punching stacking press method including: a first application step of applying one of an adhesive and a curing accelerator for accelerating curing of the adhesive to a lower surface of the strip-shaped steel sheet on an upstream side of a press working position at which the steel sheet component is punched from the strip-shaped steel sheet; and a second application step of applying the other of the adhesive and the curing accelerator to an upper surface of the strip-shaped steel sheet at the press working position.

It is described that according to this punching stacking press method, time for curing the adhesive can be significantly shortened by performing the first application step and the second application step, and productivity of a core manufactured by stacking a plurality of steel sheet components can be enhanced.

### [Citation List]

### [Patent Document]

[Patent Document 1]
   Japanese Patent No. 4648765
[Patent Document 2]
   Japanese Patent No. 6164029

### [Summary of Invention]

### [Problems to be Solved by the Invention]

According to the method for manufacturing a metal sheet stacked body of Patent Document 1, bonding between the metal sheets can be quickly performed by using the curing accelerator. Since the curing accelerator is applied in a diluted state by addition of the press working oil, it is necessary to increase the content of the curing accelerator to a considerable amount when a higher curing accelerating effect is required. However, in this case, since a ratio of the press working oil is reduced this time, there is a concern that punching workability at the time of punching the metal sheet may be affected.

In addition, according to the punching stacking press method of Patent Document 2 described above, the time for curing the adhesive can be significantly shortened. However, also here, an influence of the press working oil, which is essential for punching, on the curing accelerator has not been studied at all.

As described above, in order to further enhance the productivity of the bonded and stacked core, a lubricating function of the press working oil at the time of punching the steel sheet and a curing accelerating function of the adhesive by using the curing accelerator at the time of bonding of the steel sheet need to be exhibited at a higher level. However, in a conventional method for manufacturing a bonded and stacked core, since this is difficult, it may be difficult to achieve both high bonding strength and high productivity.

The present invention has been made in view of the above circumstances, and an object of the present invention is to provide an electrical steel sheet and a bonded and stacked core manufacturing method capable of obtaining higher productivity while ensuring sufficient bonding strength in manufacture of a bonded and stacked core.

### [Means for Solving the Problem]

In order to solve the above problems, the present invention adopts the following means.
(1) An electrical steel sheet according to an aspect of the present invention contains: as a chemical composition, in a unit of mass%,
   2.5% to 3.9% of Si;
   0.001 % to 3.0% of Al; and
   0.05% to 5.0% of Mn,
   the remainder being Fe and impurities, in which
   an insulating coating containing a curing accelerator is formed on one surface or both surfaces.

According to the electrical steel sheet described in the above (1), the curing accelerator added to the insulating coating is previously dried and sealed in the insulating coating. Therefore, when a bonded and stacked core is manufactured using this electrical steel sheet, mixing with a press working oil to be applied before press working is suppressed. Therefore, when steel sheet components are stacked and bonded, the curing accelerator can be mixed with an adhesive while maintaining a high concentration, and therefore high bonding strength can be expressed early. Therefore, it is possible to obtain higher productivity while ensuring sufficient bonding strength.

(2) In the electrical steel sheet described in the above (1),
the curing accelerator may contain an active component that accelerates anaerobic curing, selected from titanium, chromium, manganese, iron, cobalt, nickel, copper, zinc, silver, vanadium, molybdenum, ruthenium, and combinations thereof.

The active component that accelerates anaerobic curing is selected from titanium, chromium, manganese, iron, cobalt, nickel, copper, zinc, silver, vanadium, molybdenum, ruthenium, and combinations thereof. The active component that accelerates anaerobic curing may be preferably selected from copper, iron, vanadium, cobalt, chromium, silver, manganese, and combinations thereof. The active component that accelerates anaerobic curing may be desirably copper, iron, vanadium, cobalt, chromium, or a combination thereof. The active component that accelerates anaerobic curing is desirably provided in a form of a metal oxide or a salt. Preferred examples of the active component that accelerates anaerobic curing include one or a combination of two or more selected from vanadium acetylacetonate, vanadyl acetylacetonate, vanadyl stearate, vanadium propoxide, vanadium butoxide, vanadium pentoxide, cobalt naphthenate, manganese naphthenate, copper hexanoate, and copper(II) bis(2-ethylhexanoate).

According to the electrical steel sheet described in the above (2), curing of an anaerobic adhesive quickly and completely proceeds when a bonded and stacked core is manufactured using the electrical steel sheet. Therefore, the electrical steel sheet according to (2) is extremely excellent particularly in short time manufacture or manufacture requiring suppression of outgassing or the like, and can improve productivity.

(3) A bonded and stacked core manufacturing method according to an aspect of the present invention is a method for manufacturing a bonded and stacked core by performing press working on a strip-shaped steel sheet with a press working oil applied to one surface or both surfaces thereof, applying an adhesive to the one surface of the strip-shaped steel sheet to obtain a plurality of steel sheet components, and stacking and bonding the steel sheet components, in which the electrical steel sheet described in the above (1) or (2) is used as the strip-shaped steel sheet.

According to the bonded and stacked core manufacturing method described in the above (3), since the curing accelerator added to the insulating coating is previously dried and sealed in the insulating coating, mixing of the curing accelerator with a press working oil to be applied before press working is suppressed. Therefore, when steel sheet components are stacked and bonded, the curing accelerator can be mixed with an adhesive while maintaining a high concentration, and therefore high bonding strength can be expressed early. Therefore, it is possible to obtain higher productivity while ensuring sufficient bonding strength.

(4) In the bonded and stacked core manufacturing method according to the above (3), the following may be adopted.

The steel sheet components include a first steel sheet component and a second steel sheet component, and
the method includes:
a first step of preparing the first steel sheet component having the insulating coating on a first surface;
a second step of preparing the second steel sheet component including the insulating coating, the press working oil applied onto the insulating coating, and the adhesive applied onto the press working oil on a second surface; and
a third step of superimposing and bonding the first steel sheet component and the second steel sheet component such that the first surface and the second surface face each other.

According to the bonded and stacked core manufacturing method described in the above (4), before the third step, the curing accelerator is previously dried and sealed in the insulating coating, and therefore mixing of the curing accelerator with the press working oil is suppressed. Therefore, when the first steel sheet component and the second steel sheet component are superimposed and bonded in the third step, the curing accelerator can be mixed with the adhesive while maintaining a high concentration.

(5) In the bonded and stacked core manufacturing method described in the above (3), the following may be adopted.

The steel sheet components include a third steel sheet component and a fourth steel sheet component, and
the method includes:
a fourth step of preparing the third steel sheet component including the insulating coating and the press working oil applied onto the insulating coating on a third surface;
a fifth step of preparing the fourth steel sheet component including the insulating coating, the press working oil applied onto the insulating coating, and the adhesive applied onto the press working oil on a fourth surface; and
a sixth step of superimposing and bonding the third steel sheet component and the fourth steel sheet component such that the third surface and the fourth surface face each other.

According to the bonded and stacked core manufacturing method described in the above (5), before the sixth step, the curing accelerator is previously dried and sealed in the insulating coating, and therefore mixing of the curing accelerator with the press working oil is suppressed. Therefore, when the third steel sheet component and the fourth steel sheet component are superimposed and bonded in the sixth step, the curing accelerator can be mixed with the adhesive while maintaining a high concentration.

(6) In the bonded and stacked core manufacturing method described in any one of the above (3) to (5), the bonded and stacked core may be a stator for a rotary electric machine.

According to the bonded and stacked core manufacturing method described in the above (6), since higher productivity can be obtained while ensuring sufficient bonding strength, it is possible to manufacture a stator for a rotary electric machine having high performance and low manufacturing cost.

### [Effects of the Invention]

According to each of the above aspects of the present invention, it is possible to provide an electrical steel sheet and a bonded and stacked core manufacturing method capable of obtaining higher productivity while ensuring sufficient bonding strength in manufacture of a bonded and stacked core.

### [Brief Description of the Drawings]

FIG. 1 is a cross-sectional view of a rotary electric machine including a stator bonded and stacked core manufactured in each of embodiments of the present invention.
FIG. 2 is a side view of the stator bonded and stacked core.
FIG. 3 is a side view of a bonded and stacked core manufacturing apparatus according to a first embodiment of the present invention.
FIG. 4 is a flowchart for explaining a bonded and stacked core manufacturing method according to the embodiment.
FIG. 5 is a flowchart for explaining a modification example of the bonded and stacked core manufacturing method.
FIG. 6 is a side view of a bonded and stacked core manufacturing apparatus according to a second embodiment of the present invention.
FIG. 7 is a flowchart for explaining a bonded and stacked core manufacturing method according to the embodiment.
FIG. 8 is a flowchart for explaining a modification example of the bonded and stacked core manufacturing method.

### [Embodiments of the Invention]

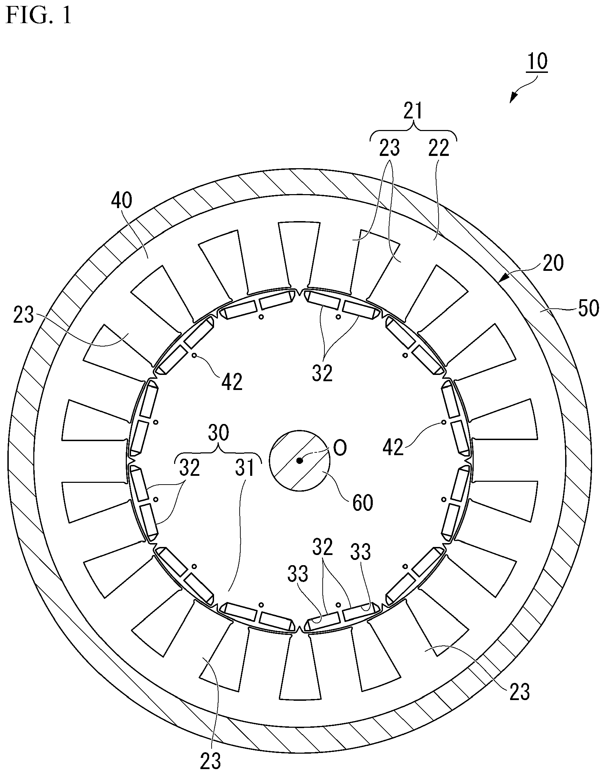

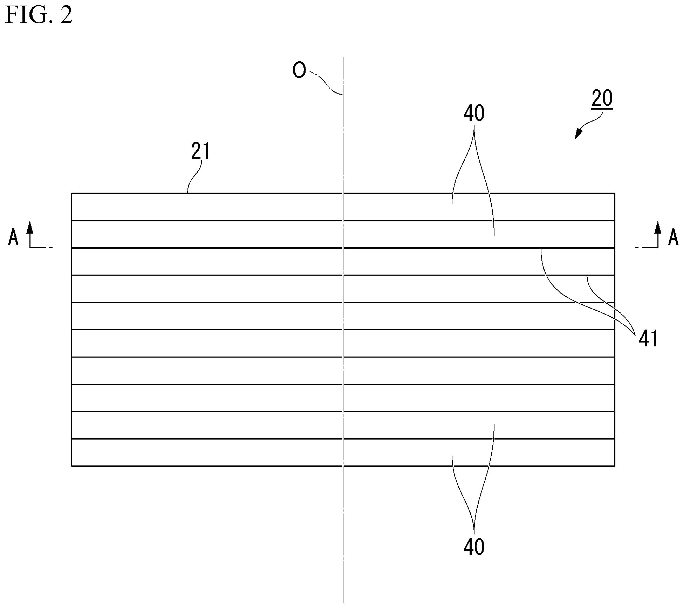

Hereinafter, an electrical steel sheet and a bonded and stacked core manufacturing method according to each of embodiments and modification examples of the present invention will be described with reference to the drawings. Before that, with reference to FIGS. 1 and 2, a stator bonded and stacked core (bonded and stacked core. stator for a rotary electric machine) manufactured in each of the embodiments and the modification examples will be described first.

### [Stator bonded and stacked core]

FIG. 1 is a cross-sectional view of a rotary electric machine 10 including a stator bonded and stacked core 21 manufactured in each of the embodiments. FIG. 2 is a side view of the stator bonded and stacked core 21.

Hereinafter, a case where the rotary electric machine 10 shown in FIG. 1 is an electric motor, specifically, an AC electric motor, more specifically, a synchronous electric motor, and still more specifically, a permanent magnet field type electric motor will be described as an example. This type of electric motor is suitably adopted in, for example, an electric vehicle.

As shown in FIG. 1, the rotary electric machine 10 includes a stator 20, a rotor 30, a case 50, and a rotating shaft 60. The stator 20 and the rotor 30 are housed in the case 50. The stator 20 is fixed in the case 50.

In the example of FIG. 1, an inner rotor type in which the rotor 30 is positioned on a radially inner side of the stator 20 is shown as the rotary electric machine 10. However, the rotary electric machine 10 may be an outer rotor type in which the rotor 30 is positioned outside the stator 20. Here, a case where the rotary electric machine 10 is a three-phase AC motor having 12 poles and 18 slots will be exemplified. However, the number of poles, the number of slots, the number of phases, and the like can be appropriately changed.

For example, the rotary electric machine 10 can rotate at a rotation speed of 1000 rpm by applying an excitation current having an effective value of 10 A and a frequency of 100 Hz to each phase.

The stator 20 includes the stator bonded and stacked core 21 and a winding (not shown).

The stator bonded and stacked core 21 includes an annular core back portion 22 and a plurality of tooth portions 23. Hereinafter, a central axis O direction of the stator bonded and stacked core 21 (or the core back portion 22) is referred to as an axial direction, a radial direction (direction orthogonal to the central axis O) of the stator bonded and stacked core 21 (or the core back portion 22) is referred to as a radial direction, and a circumferential direction (a direction going around the central axis O) of the stator bonded and stacked core 21 (or the core back portion 22) is referred to as a circumferential direction.

The core back portion 22 is formed in a circular shape in a plane view in which the stator 20 is viewed from the axial direction.

The plurality of tooth portions 23 protrudes radially inward from an inner circumference of the core back portion 22. The plurality of tooth portions 23 are arranged at equal angular intervals in the circumferential direction. In the example of FIG. 1, 18 tooth portions 23 are arranged every 20 degrees of a central angle centered on the central axis O. The plurality of tooth portions 23 are formed in the same shape and the same size. Therefore, the plurality of tooth portions 23 have the same thickness dimension.

The winding is wound around the tooth portion 23. The winding may be wound by concentrated winding or distributed winding.

The rotor 30 is disposed on an inner side in the radial direction with respect to the stator 20 (stator bonded and stacked core 21). The rotor 30 includes a rotor core 31 and a plurality of permanent magnets 32.

The rotor core 31 is formed in an annular shape (circular shape) disposed coaxially with the stator 20. The rotating shaft 60 is disposed in the rotor core 31. The rotating shaft 60 is fixed to the rotor core 31.

The plurality of permanent magnets 32 is fixed to the rotor core 31. In the example of FIG. 1, a pair of permanent magnets 32 forms one magnetic pole. The plurality of pairs of permanent magnets 32 are arranged at equal angular intervals in the circumferential direction. In the example of FIG. 1, 12 pairs of (24 in total) permanent magnets 32 are arranged every 30 degrees of a central angle centered on the central axis O.

In the example of FIG. 1, an embedded permanent magnet type motor is adopted as a permanent magnet field type electric motor. A plurality of through-holes 33 penetrating the rotor core 31 in the axial direction is formed in the rotor core 31. The plurality of through-holes 33 are arranged corresponding to the arrangement of the plurality of permanent magnets 32. Each of the permanent magnets 32 is fixed to the rotor core 31 in a state of being disposed in the corresponding through-hole 33. Each of the permanent magnets 32 can be fixed to the rotor core 31, for example, by bonding an outer surface of the permanent magnet 32 to an inner surface of the through-hole 33 with an adhesive. Note that, as the permanent magnet field type electric motor, a surface magnet type motor may be adopted instead of the embedded permanent magnet type.

The stator bonded and stacked core 21 and the rotor core 31 are both stacked cores. For example, as shown in FIG. 2, the stator bonded and stacked core 21 is formed by stacking a plurality of electrical steel sheets 40 in a stacking direction. Note that the stacking thickness (the total length along the central axis O) of each of the stator bonded and stacked core 21 and the rotor core 31 is, for example, 50.0 mm. The outer diameter of the stator bonded and stacked core 21 is, for example, 250.0 mm. The inner diameter of the stator bonded and stacked core 21 is, for example, 165.0 mm. The outer diameter of the rotor core 31 is, for example, 163.0 mm. The inner diameter of the rotor core 31 is, for example, 30.0 mm. Note that these values are merely examples, and the stacking thickness, the outer diameter, and the inner diameter of the stator bonded and stacked core 21, and the stacking thickness, the outer diameter, and the inner diameter of the rotor core 31 are not limited only to these values. Here, the inner diameter of the stator bonded and stacked core 21 is based on a distal end portion of the tooth portion 23 in the stator bonded and stacked core 21. That is, the inner diameter of the stator bonded and stacked core 21 is the diameter of a virtual circle inscribed in the distal end portions of all the tooth portions 23.

Each of the electrical steel sheets 40 forming the stator bonded and stacked core 21 and the rotor core 31 is formed by, for example, punching a strip-shaped steel sheet serving as a base metal. As the electrical steel sheet 40, a known electrical steel sheet can be used. The electrical steel sheet 40 contains, as a chemical composition, 2.5% to 3.9% of Si in mass% as shown in mass% unit below. By setting the chemical composition within this range, yield strength of each of the electrical steel sheets 40 can be set to 380 MPa or more and 540 MPa or less.

Si: 2.5% to 3.9%
Al: 0.001% to 3.0%
Mn: 0.05% to 5.0%
Remainder: Fe and impurities

In the present embodiment, a non-oriented electrical steel sheet is adopted as the electrical steel sheet 40. As the non-oriented electrical steel sheet, a non-oriented electrical steel strip of JISC2552:2014 can be adopted. However, as the electrical steel sheet 40, a grain-oriented electrical steel sheet may be adopted instead of the non-oriented electrical steel sheet. As the grain-oriented electrical steel sheet in this case, an oriented electrical steel strip of JISC2553:2012 can be adopted.

One surface or both surfaces of the electrical steel sheet 40 are coated with a phosphate-based insulating coating in order to improve workability of the stacked core and core loss of the stacked core. Examples of a substance constituting the insulating coating include (1) an inorganic compound, (2) an organic resin, and (3) a mixture of an inorganic compound and an organic resin. Examples of the inorganic compound include (1) a complex of a dichromate and boric acid, and (2) a complex of a phosphate and silica. Examples of the organic resin include an epoxy-based resin, an acrylic resin, an acrylic styrene-based resin, a polyester-based resin, a silicon-based resin, and a fluorine-based resin.

A curing accelerator is added to an insulating coating of each of the embodiments and the modification examples. The curing accelerator is previously dried before being added by heating the liquid curing accelerator or applying air to the curing accelerator. Then, the dried curing accelerator is added to a treatment liquid for forming an insulating coating to form the insulating coating. Mixing of such a curing accelerator that is previously dried and sealed in the insulating coating with a press working oil to be applied before press working is suppressed. Therefore, when steel sheet components are stacked and bonded, the curing accelerator can be mixed with an adhesive while maintaining a high concentration, and therefore high bonding strength can be expressed early. Therefore, it is possible to obtain higher productivity while ensuring sufficient bonding strength.

Note that the insulating coating can be formed by applying a treatment liquid for forming an insulating coating (to which a curing accelerator has been added) to a surface of an electrical steel sheet with, for example, a roll coater, and then baking the treatment liquid in a heating furnace. Here, it is conceivable that a preferable application amount of the treatment liquid in the step of forming the insulating coating is within a range of 0.4 g/m² to 2.0 g/m² as an average value. In addition, it is conceivable that the sheet temperature of the electrical steel sheet in the heating furnace is within a range of 140°C to 330°C. Furthermore, it is conceivable that the baking time of the electrical steel sheet in the heating furnace is within a range of 15 seconds to 60 seconds.

In addition, in preparation of the treatment liquid containing a compound having a curing accelerating action, it is conceivable that the content of the compound with respect to 100 parts by mass of water and solvent is within a range of 0.2 parts by mass to 20 parts by mass. By setting the content of the compound in the state of the treatment liquid within this range, the content of the compound in the insulating coating in a solid body formed using the treatment liquid can be 0.3 wt% to 80 wt%.

As a curing accelerator in a case of using an anaerobic adhesive as the adhesive, a curing accelerator containing an active component that accelerates anaerobic curing, selected from titanium, chromium, manganese, iron, cobalt, nickel, copper, zinc, silver, vanadium, molybdenum, ruthenium, and combinations thereof can be adopted. In this case, curing of the anaerobic adhesive quickly and completely proceeds when a bonded and stacked core is manufactured using the electrical steel sheet. Therefore, it is extremely excellent particularly in short time manufacture or manufacture requiring suppression of outgassing or the like, and can improve productivity.

Note that the active component that accelerates anaerobic curing is selected from titanium, chromium, manganese, iron, cobalt, nickel, copper, zinc, silver, vanadium, molybdenum, ruthenium, and combinations thereof. The active component that accelerates anaerobic curing may be preferably selected from copper, iron, vanadium, cobalt, chromium, silver, manganese, and combinations thereof. The active component that accelerates anaerobic curing may be desirably copper, iron, vanadium, cobalt, chromium, or a combination thereof. The active component that accelerates anaerobic curing is desirably provided in a form of a metal oxide or a salt. Preferred examples of the active component that accelerates anaerobic curing include one or a combination of two or more selected from vanadium acetylacetonate, vanadyl acetylacetonate, vanadyl stearate, vanadium propoxide, vanadium butoxide, vanadium pentoxide, cobalt naphthenate, manganese naphthenate, copper hexanoate, and copper (II) bis(2-ethylhexanoate).

### [First Embodiment]

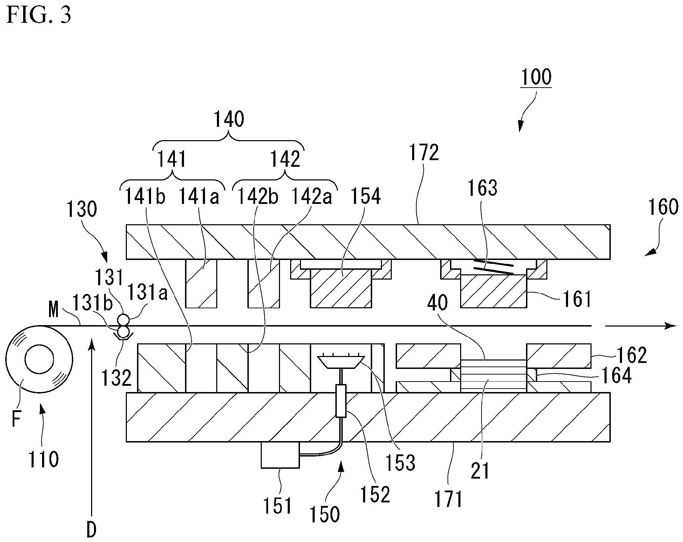

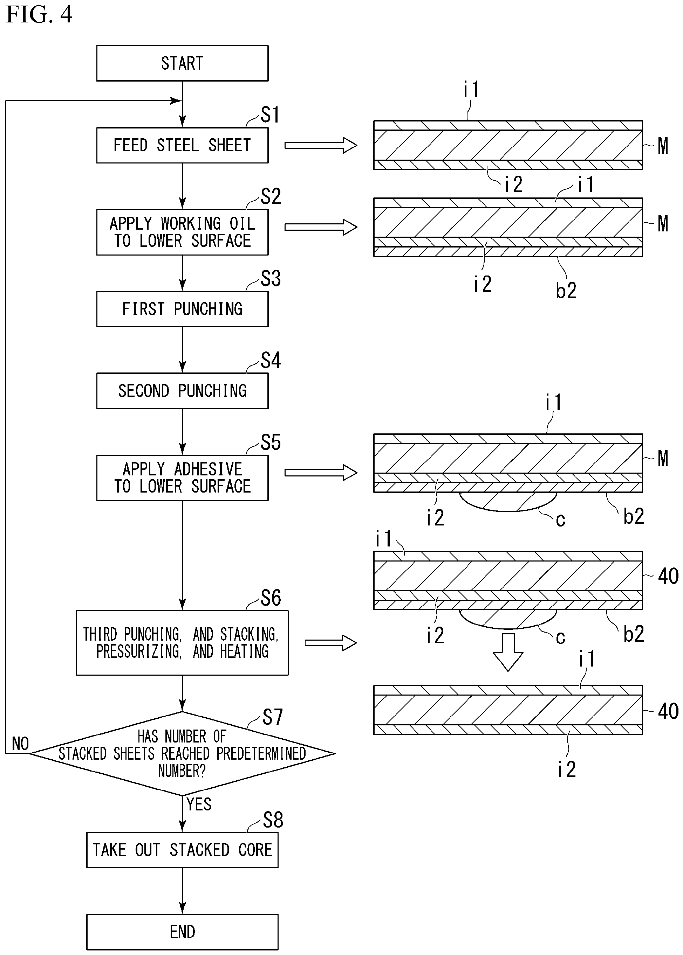

A first embodiment of the present invention will be described below with reference to FIGS. 3 and 4. FIG. 3 is a side view of a bonded and stacked core manufacturing apparatus according to the present embodiment. FIG. 4 is a flowchart for explaining a bonded and stacked core manufacturing method according to the present embodiment.

As shown in FIG. 3, a bonded and stacked core manufacturing apparatus 100 of the present embodiment includes a strip-shaped steel sheet supply unit 110, a drive unit (not shown), a press working oil application unit 130, a press working unit 140, an adhesive application unit 150, and a stacking and bonding unit 160.

A hoop material F around which a strip-shaped steel sheet M to be a material of an electrical steel sheet (steel sheet component) 40 is wound is pivotally supported by the strip-shaped steel sheet supply unit 110, and the strip-shaped steel sheet M is fed toward the right side of FIG. 3. In the following description, the right side of a drawing, which is a feeding direction of the strip-shaped steel sheet M, may be referred to as a downstream side, and the left side of the drawing, which is the direction opposite thereto, may be referred to as an upstream side. The strip-shaped steel sheet M fed toward the downstream side from the strip-shaped steel sheet supply unit 110 is a steel sheet having the above-described chemical composition, and both surfaces (both an upper surface and a lower surface) of the strip-shaped steel sheet M are coated with the above-described insulating coatings. The above-described curing accelerator is previously added to the insulating coating. Therefore, in the strip-shaped steel sheet supply unit 110, on the upper and lower surfaces of the strip-shaped steel sheet M, the curing accelerator is present uniformly along the upper and lower surfaces in a state of being previously dried and sealed in the insulating coating.

The drive unit is disposed at a position D between the strip-shaped steel sheet supply unit 110 and the press working oil application unit 130. The drive unit intermittently feeds the strip-shaped steel sheet M in the right direction of the drawing from the strip-shaped steel sheet supply unit 110 toward the press working oil application unit 130. On the upper and lower surfaces of the strip-shaped steel sheet M fed from the strip-shaped steel sheet supply unit 110, the curing accelerator is uniformly present along each of the surfaces in a state of being previously dried and sealed in the insulating coating.

The press working oil application unit 130 includes an application roller 131 and an oil pan 132.

The oil pan 132 is disposed at a position below the strip-shaped steel sheet M and immediately below the application roller 131. The application roller 131 includes an upper roller 131a and a lower roller 131b.

The upper roller 131a is disposed immediately above the strip-shaped steel sheet M, and can be switched between a state of being in contact with the upper surface of the strip-shaped steel sheet M and a state of being separated from the upper surface of the strip-shaped steel sheet M by moving up and down. The upper roller 131a can supply a press working oil supplied from a press working oil supply unit (not shown) to the upper surface of the strip-shaped steel sheet M by rolling while being in contact with the upper surface of the steel sheet M in a state where an outer circumferential surface of the upper roller 131a is impregnated with the press working oil.

The lower roller 131b is disposed immediately below the strip-shaped steel sheet M, and can be switched between a state of being in contact with the lower surface of the strip-shaped steel sheet M and a state of being separated from the lower surface of the strip-shaped steel sheet M by moving up and down. The lower roller 131b can supply a press working oil supplied from the press working oil supply unit to the lower surface of the strip-shaped steel sheet M by rolling while being in contact with the lower surface of the steel sheet M in a state where an outer circumferential surface of the lower roller 131b is impregnated with the press working oil.

The oil pan 132 receives and collects an excess press working oil dripping from the upper roller 131a and the lower roller 131b, and returns the excess press working oil to the press working oil supply unit.

According to the press working oil application unit 130, by supplying a press working oil from the press working oil supply unit in a state where the upper roller 131a is in contact with the upper surface of the strip-shaped steel sheet M, it is possible to continuously or intermittently feed the strip-shaped steel sheet M to the downstream side while forming a layer of the press working oil over the entire surface on the insulating coating on the upper surface of the strip-shaped steel sheet M.

Similarly, by supplying a press working oil from the press working oil supply unit in a state where the lower roller 131b is in contact with the lower surface of the strip-shaped steel sheet M, it is possible to continuously or intermittently feed the strip-shaped steel sheet M to the downstream side while forming a layer of the press working oil over the entire surface on the insulating coating on the lower surface of the strip-shaped steel sheet M.

Alternatively, by sandwiching the strip-shaped steel sheet M between the upper roller 131a and the lower roller 131b, it is possible to continuously or intermittently feed the strip-shaped steel sheet M to the downstream side while forming a layer of the press working oil over the entire surfaces on both the insulating coating on the upper surface of the strip-shaped steel sheet M and the insulating coating on the lower surface of the strip-shaped steel sheet M.

As described above, by moving the respective positions of the upper roller 131a and the lower roller 131b up and down as necessary, selection can be made from three cases of applying the press working oil only to the upper surface of the strip-shaped steel sheet M, applying the press working oil only to the lower surface of the strip-shaped steel sheet M, and applying the press working oil to both the upper surface and the lower surface of the strip-shaped steel sheet M.

Here, in any of the above cases, since the curing accelerator on the upper and lower surfaces of the strip-shaped steel sheet M is sealed in a dried state in the insulating coating before the press working oil is applied, a decrease in the concentration of the curing accelerator due to application of the press working oil is suppressed. Therefore, the concentration of the curing accelerator on the upper surface of the strip-shaped steel sheet M after application of the press working oil is maintained unchanged from the time of the hoop material F. Similarly, the concentration of the curing accelerator on the lower surface of the strip-shaped steel sheet M after application of the press working oil is also maintained unchanged from the time of the hoop material F. Therefore, the strip-shaped steel sheet M after passing through the press working oil application unit 130 is fed to the press working unit 140 while maintaining the concentration of the curing accelerator on each of the upper and lower surfaces of the strip-shaped steel sheet M.

The press working unit 140 includes a first-stage punching unit 141 and a second-stage punching unit 142.

The first-stage punching unit 141 is disposed on the downstream side of the press working oil application unit 130 and includes a male die 141a and a female die 141b. The male die 141a and the female die 141b are coaxially disposed in the vertical direction, and the strip-shaped steel sheet M is inserted therebetween. Therefore, the male die 141a faces the upper surface of the strip-shaped steel sheet M, and the female die 141b faces the lower surface of the strip-shaped steel sheet M. Then, in a state where feeding of the strip-shaped steel sheet M is temporarily stopped, the male die 141a is moved downward to reach the inside of the female die 141b by a hydraulic mechanism (not shown), thereby performing first punching necessary for forming the electrical steel sheet 40 from the strip-shaped steel sheet M. At this time, since the press working oil is previously applied to the strip-shaped steel sheet M, punching can be performed without causing seizure or the like. After the punching, the male die 141a is moved upward to be pulled out from the female die 141b, and the strip-shaped steel sheet M is fed toward the downstream side again.

The second-stage punching unit 142 is disposed on the downstream side of the first-stage punching unit 141, and includes a male die 142a and a female die 142b. The male die 142a and the female die 142b are coaxially disposed in the vertical direction, and the strip-shaped steel sheet M after the first punching is inserted therebetween. Therefore, the male die 142a faces the upper surface of the strip-shaped steel sheet M, and the female die 142b faces the lower surface of the strip-shaped steel sheet M. Then, in a state where feeding of the strip-shaped steel sheet M is temporarily stopped again, the male die 142a is moved downward to reach the inside of the female die 142b by a hydraulic mechanism (not shown), thereby performing second punching necessary for forming the electrical steel sheet 40 from the strip-shaped steel sheet M. Also at this time, since the press working oil is previously applied to the upper and lower surfaces of the strip-shaped steel sheet M, punching can be performed without causing seizure or the like. After the punching, the male die 142a is moved upward to be pulled out from the female die 142b, and the strip-shaped steel sheet M is fed toward the downstream side again.

The strip-shaped steel sheet M that has passed through the press working unit 140 in this manner contains the curing accelerator still maintaining a high concentration on each of the upper and lower surfaces of the strip-shaped steel sheet M, and is fed to the adhesive application unit 150 as it is.

The adhesive application unit 150 is disposed on the downstream side of the press working unit 140. The adhesive application unit 150 includes an air pressure feeder 151, a syringe 152, a nozzle 153, and a steel sheet retainer 154.

The syringe 152 is a container that stores an adhesive, and is connected between the air pressure feeder 151 and the nozzle 153 through a pipe. When an anaerobic adhesive is used as the adhesive, "ARONTITE" (registered trademark) manufactured by Toagosei Co., Ltd. can be exemplified. Alternatively, when a 2-cyanoacrylate-based adhesive is used as the adhesive, "ARON ALPHA" (registered trademark) manufactured by Toagosei Co., Ltd. can be exemplified.

The nozzle 153 includes a plurality of needles whose ejection ports face upward. The needles are disposed below the strip-shaped steel sheet M. Therefore, the ejection ports of the needles face the lower surface of the strip-shaped steel sheet M.

The steel sheet retainer 154 is disposed above the nozzle 153 (immediately above the needles). Therefore, the steel sheet retainer 154 faces the upper surface of the strip-shaped steel sheet M. The steel sheet retainer 154 is pushed downward by a hydraulic mechanism (not shown) in a state where feeding of the strip-shaped steel sheet M is temporarily stopped. As a result, the lower surface of the steel sheet retainer 154 comes into contact with the upper surface of the strip-shaped steel sheet M to push the strip-shaped steel sheet M downward. As a result, the height position of the strip-shaped steel sheet M can be pushed down and positioned to the adhesive application position by the nozzle 153. In this positioning state, the lower surface of the strip-shaped steel sheet M is close to the ejection ports of the needles.

Furthermore, in this positioning state, when the air pressure feeder 151 is activated to pressure-feed an appropriate amount of air to the syringe 152, the adhesive in the syringe 152 is fed to the nozzle 153. As a result, an appropriate amount of adhesive is ejected from each of the needles and applied to the lower surface of the strip-shaped steel sheet M. Thereafter, by raising the steel sheet retainer 154 by the hydraulic mechanism, the height position of the strip-shaped steel sheet M is returned to the original height.

Here, the adhesive is applied onto a surface of the press working oil coating the insulating coating on the lower surface of the strip-shaped steel sheet M. Although the press working oil is liquid, since the insulating coating itself is solid, mixing of the press working oil with the curing accelerator added into the insulating coating is suppressed. Therefore, a state where the curing accelerator and the adhesive are separated from each other is maintained on the lower surface of the strip-shaped steel sheet M. As a result, the strip-shaped steel sheet M that has passed through the adhesive application unit 150 contains the curing accelerator still maintaining a high concentration on each of the upper and lower surfaces of the strip-shaped steel sheet M, and is fed to the stacking and bonding unit 160 as it is.

The stacking and bonding unit 160 is disposed on the downstream side of the adhesive application unit 150. The stacking and bonding unit 160 includes an outer circumferential punching male die 161, an outer circumferential punching female die 162, a spring 163, and a heater 164.

The outer circumferential punching male die 161 is a cylindrical die having a circular bottom surface, and a lower end of the spring 163 is connected to an upper end of the outer circumferential punching male die 161. The outer circumferential punching male die 161 can move up and down together with the spring 163 in a state of being supported by the spring 163. The outer circumferential punching male die 161 has an outer diameter dimension substantially the same as the outer diameter dimension of the stator bonded and stacked core 21.

The outer circumferential punching female die 162 is a die having a cylindrical internal space, and has an inner diameter dimension substantially the same as the outer diameter dimension of the stator bonded and stacked core 21.

The heater 164 is integrally incorporated in the outer circumferential punching female die 162. The heater 164 heats the electrical steel sheets (steel sheet components) 40 stacked in the outer circumferential punching female die 162 from a circumference of the electrical steel sheets 40. When a thermosetting type is used as the adhesive, the adhesive is cured by receiving heat from the heater 164. On the other hand, when a room-temperature curing type is used as the adhesive, the adhesive is cured at room temperature without requiring heating.

According to the stacking and bonding unit 160, in a state where feeding of the strip-shaped steel sheet M is temporarily stopped, the outer circumferential punching male die 161 is lowered to sandwich the strip-shaped steel sheet M between the outer circumferential punching male die 161 and the outer circumferential punching female die 162, and furthermore, the outer circumferential punching male die 161 is pressed into the outer circumferential punching female die 162, whereby the electrical steel sheet 40 whose outer circumference has been punched from the strip-shaped steel sheet M is obtained.

The punched electrical steel sheet 40 is stacked on an upper surface of another electrical steel sheet 40 that has been previously punched, and stacked and bonded in the outer circumferential punching female die 162, and furthermore, a pressurizing force from the outer circumferential punching male die 161 and heating from the heater 164 are applied to the punched electrical steel sheet 40. At this time, the pressurizing force applied from the outer circumferential punching male die 161 to the electrical steel sheet 40 is maintained constant all the time by a biasing force of the spring 163.

Due to the pressurizing force at this time, the adhesive on a lower surface of the electrical steel sheet 40 punched this time is instantaneously cured while being mixed with at least one of a curing accelerator in an insulating coating on an upper surface of the other electrical steel sheet 40 that has been previously subjected to outer circumferential punching and the curing accelerator in the insulating coating on the lower surface of the electrical steel sheet 40 punched this time.

As described above, the electrical steel sheet 40 punched this time is bonded and fixed to the upper surface of the electrical steel sheet 40 punched last time. By repeating such steps of outer circumferential punching, pressurizing, and heating as many times as the number of stacked electrical steel sheets 40, the stator bonded and stacked core 21 is formed in the outer circumferential punching female die 162.

As shown in FIG. 3, the female die 141b, the female die 142b, the nozzle 153, the outer circumferential punching female die 162, and the heater 164 are fixed onto a common fixing base 171. Therefore, relative positions of the female die 141b, the female die 142b, the nozzle 153, the outer circumferential punching female die 162, and the heater 164 in the horizontal direction and the up-down direction are fixed.

Similarly, the male die 141a, the male die 142a, the steel sheet retainer 154, and the outer circumferential punching male die 161 are also fixed to the lower surface of the common movable base 172. Therefore, relative positions of the male die 141a, the male die 142a, the steel sheet retainer 154, and the outer circumferential punching male die 161 in the horizontal direction and the up-down direction are fixed.

The drive unit feeds the strip-shaped steel sheet M toward the downstream side, and lowers the movable base 172 when the drive unit temporarily stops the strip-shaped steel sheet M, whereby outer circumferential punching, stacking, and bonding of the electrical steel sheet 40, application of an adhesive to the position of the electrical steel sheet 40 to be subjected to outer circumferential punching next from the strip-shaped steel sheet M, the second punching to the position of the strip-shaped steel sheet M to which the adhesive is applied next, and the first punching to the position of the strip-shaped steel sheet M to be subjected to the second punching next are simultaneously performed.

Subsequently, the movable base 172 is raised and retracted above the strip-shaped steel sheet M, and then the strip-shaped steel sheet M is fed again toward the downstream side by a predetermined distance by the drive unit and temporarily stopped again. In this state, the movable base 172 is lowered again, and working at each position is continuously performed. As described above, the step of moving the movable base 172 up and down during a temporary stop while intermittently feeding the strip-shaped steel sheet M by the drive unit is repeated, whereby the stator bonded and stacked core 21 is manufactured.

A bonded and stacked core manufacturing method using the bonded and stacked core manufacturing apparatus 100 having the above-described constitution will be described below with reference to FIG. 4. In the present embodiment, a case where an insulating coating to which a curing accelerator is added is formed on each of upper and lower surfaces of the strip-shaped steel sheet M, a press working oil is applied only to the lower surface of the strip-shaped steel sheet M, and an adhesive is applied only to the lower surface of the strip-shaped steel sheet M will be exemplified.

First, as shown in FIG. 4, the bonded and stacked core manufacturing method of the present embodiment includes a steel sheet feeding step S1, a working oil application step S2, a first punching step S3, a second punching step S4, an adhesive application step S5, a third punching and stacking step S6, a stacked sheet number confirmation step S7, and a taking-out step S8.

In the steel sheet feeding step S1, the strip-shaped steel sheet M is fed from the hoop material F toward the downstream side. A curing accelerator is added to both the inside of an insulating coating i1 coating the upper surface of the strip-shaped steel sheet M and the inside of an insulating coating i2 coating the lower surface of the strip-shaped steel sheet M. Note that, for convenience of description, references i1 and i2 are used in order to distinguish the insulating coatings on the upper and lower surfaces of the strip-shaped steel sheet M from each other. However, these insulating coatings i1 and i2 have the same components and thickness.

In the subsequent working oil application step S2, a press working oil b2 is applied only to the lower surface of the strip-shaped steel sheet M by the lower roller 131b. As a result, a layer of the press working oil b2 coating the entire surface of the insulating coating i2 is formed. At this time, since the curing accelerator is retained in the solid insulating coating i2, the curing accelerator is not mixed with the press working oil b2 to decrease a concentration, and substantially maintains the original state.

In the subsequent first punching step S3, first punching of the strip-shaped steel sheet M is performed by the first-stage punching unit 141. At this time, since the press working oil b2 is previously applied to the strip-shaped steel sheet M, a defect in press working such as seizure between the male die 141a and the female die 141b does not occur.

In the subsequent second punching step S4, second punching of the strip-shaped steel sheet M is performed by the second-stage punching unit 142. Also at this time, since the press working oil b2 is previously applied to the strip-shaped steel sheet M, a defect in press working such as seizure between the male die 142a and the female die 142b does not occur.

Through the first punching step S3 and the second punching step S4 described above, the core back portion 22 and the tooth portion 23 shown in FIG. 1 are formed in the strip-shaped steel sheet M except for an outer shape portion.

In the subsequent adhesive application step S5, an adhesive c ejected from the nozzle 153 is applied to the lower surface of the strip-shaped steel sheet M via the press working oil b2. At this time, the adhesive c is applied in a point shape having a predetermined thickness dimension and a predetermined diameter dimension. Here, since the adhesive c has not been mixed with the curing accelerator yet, the adhesive c is in a liquid form.

In the subsequent third punching and stacking step S6, the electrical steel sheet 40 whose outer circumference has been punched from the strip-shaped steel sheet M by the outer circumferential punching male die 161 is stacked on an upper surface of another electrical steel sheet 40 that has been previously punched. The insulating coating i1 to which a curing accelerator is added is formed on the upper surface of the other electrical steel sheet 40. The electrical steel sheet 40 that has been subjected to outer circumferential punching this time is stacked on the other electrical steel sheet 40 and heated while being pressurized. Then, the adhesive c on the lower surface of the electrical steel sheet 40 that has been subjected to outer circumferential punching this time is mixed with the curing accelerator in the insulating coating i1 on the upper surface of the other electrical steel sheet 40 that has been previously subjected to outer circumferential punching. At the same time, the adhesive c pushes away the press working oil b2 on the lower surface of the electrical steel sheet 40 that has been subjected to outer circumferential punching this time and is mixed also with the curing accelerator in the insulating coating i2. In this manner, the adhesive c is instantaneously cured while being mixed with the curing accelerator included in each of the insulating coatings i1 and i2. At this time, since the curing accelerator can be mixed with the adhesive c while maintaining a concentration, a curing accelerating effect can be sufficiently exhibited.

By sequentially repeating the above steps, a predetermined number of electrical steel sheets 40 are stacked and bonded, and the stator bonded and stacked core 21 is completed.

That is, in the stacked sheet number confirmation step S7, it is determined whether or not the number of stacked electrical steel sheets 40 has reached a predetermined number. As a result, if the number has not reached the predetermined number (determination: NO), the flow returns to the steel sheet feeding step S1, and the steel sheet feeding step S1 to the third punching and stacking step S6 are repeated again. On the other hand, if the number has reached the predetermined number in the stacked sheet number confirmation step S7 (determination: YES), the flow proceeds to the taking-out step S8.

In the subsequent taking-out step S8, the completed stator bonded and stacked core 21 is taken out from the outer circumferential punching female die 162, whereby all the steps of the bonded and stacked core manufacturing method are completed.

In the completed stator bonded and stacked core 21, high insulation performance by the insulating coatings i1 and i2 is ensured, and high bonding strength can be ensured early by the curing accelerator included in each of the insulating coatings i1 and i2. Here, the insulation performance required by the stator bonded and stacked core 21 can be confirmed, for example, by measuring that a numerical value of surface insulation resistance satisfies 10 Ω-cm²/sheet or more. The same applies to other embodiments and modification examples described below.

The gist of the bonded and stacked core manufacturing method using the bonded and stacked core manufacturing apparatus 100 described above will be summarized below.
(1) The electrical steel sheet 40 (strip-shaped steel sheet M) of the present embodiment contains, as a chemical composition, the following substances in unit mass%.
   Si: 2.5% to 3.9%
   Al: 0.001% to 3.0%
   Mn: 0.05% to 5.0%
   Remainder: Fe and impurities

The insulating coatings i1 and i2 each containing a curing accelerator are formed on both surfaces of the electrical steel sheet 40 (strip-shaped steel sheet M). Note that the present invention is not limited to a case where both the insulating coatings i1 and i2 are formed, and only one (one surface) of the insulating coatings i1 and i2 may be formed.

According to the electrical steel sheet 40 described in (1), since the curing accelerator added into each of the insulating coatings i1 and i2 is previously dried and sealed in each of the insulating coatings i1 and i2 when the stator bonded and stacked core 21 is manufactured using the electrical steel sheet 40, mixing of the curing accelerator with the press working oil b2 to be applied before press working is suppressed. Therefore, when the electrical steel sheets 40 are stacked and bonded, the curing accelerator can be mixed with the adhesive c while maintaining a high concentration, and therefore high bonding strength can be expressed early. Therefore, it is possible to obtain higher productivity while ensuring sufficient bonding strength.

(2) In the electrical steel sheet 40 described in (1),
the curing accelerator may contain an active component that accelerates anaerobic curing, selected from titanium, chromium, manganese, iron, cobalt, nickel, copper, zinc, silver, vanadium, molybdenum, ruthenium, and combinations thereof.

According to the electrical steel sheet 40 described in (2), when the stator bonded and stacked core 21 is manufactured by stacking a plurality of the electrical steel sheets 40 and bonding the electrical steel sheets 40 with an anaerobic adhesive, curing of the anaerobic adhesive quickly and completely proceeds. Therefore, the electrical steel sheet according to (2) is extremely excellent particularly in short time manufacture or manufacture requiring suppression of outgassing or the like, and can improve productivity.

(3) The bonded and stacked core manufacturing method of the present embodiment is a method for manufacturing the stator bonded and stacked core 21 by performing press working on the strip-shaped steel sheet M with the press working oil b2 applied to one surface thereof, applying the adhesive c to the one surface of the strip-shaped steel sheet M to obtain a plurality of steel sheet components 40, and stacking and bonding the steel sheet components 40, and uses the electrical steel sheet 40 described in (1) or (2) as the strip-shaped steel sheet M.

According to the bonded and stacked core manufacturing method described in (3), since the curing accelerator added to each of the insulating coatings i1 and i2 is previously dried and sealed in each of the insulating coatings i1 and i2, mixing of the curing accelerator with the press working oil b2 to be applied before press working is suppressed. Therefore, when the electrical steel sheets 40 are stacked and bonded, the curing accelerator can be mixed with the adhesive c while maintaining a high concentration, and therefore high bonding strength can be expressed early. Therefore, it is possible to obtain higher productivity while ensuring sufficient bonding strength.

(4) In the bonded and stacked core manufacturing method according to (3), the following may be adopted.

Each electrical steel sheet 40 includes a previously punched electrical steel sheet (first steel sheet component) 40 and a subsequently punched electrical steel sheet (second steel sheet component) 40. This bonded and stacked core manufacturing method includes: a first step of preparing a previously punched electrical steel sheet (first steel sheet component) 40 having the insulating coating i1 on an upper surface (first surface) thereof; a second step of preparing, on a lower surface (second surface) thereof, a subsequently punched electrical steel sheet (second steel sheet component) 40 having the insulating coating i2, the press working oil b2 applied onto the insulating coating i2, and the adhesive c applied onto the press working oil b2; and a third step of superimposing and bonding the previously punched electrical steel sheet (first steel sheet component) 40 and the subsequently punched electrical steel sheet (second steel sheet component) 40 such that the upper surface (first surface) and the lower surface (second surface) face each other.

According to the bonded and stacked core manufacturing method described in (4), before the third step, the curing accelerator is previously dried and sealed in each of the insulating coatings i1 and i2, and therefore mixing of the curing accelerator with the press working oil b2 is suppressed. Therefore, in the third step, when the previously punched electrical steel sheet (first steel sheet component) 40 and the subsequently punched electrical steel sheet (second steel sheet component) 40 are superimposed and bonded, the curing accelerator can be mixed with the adhesive c while maintaining a high concentration.

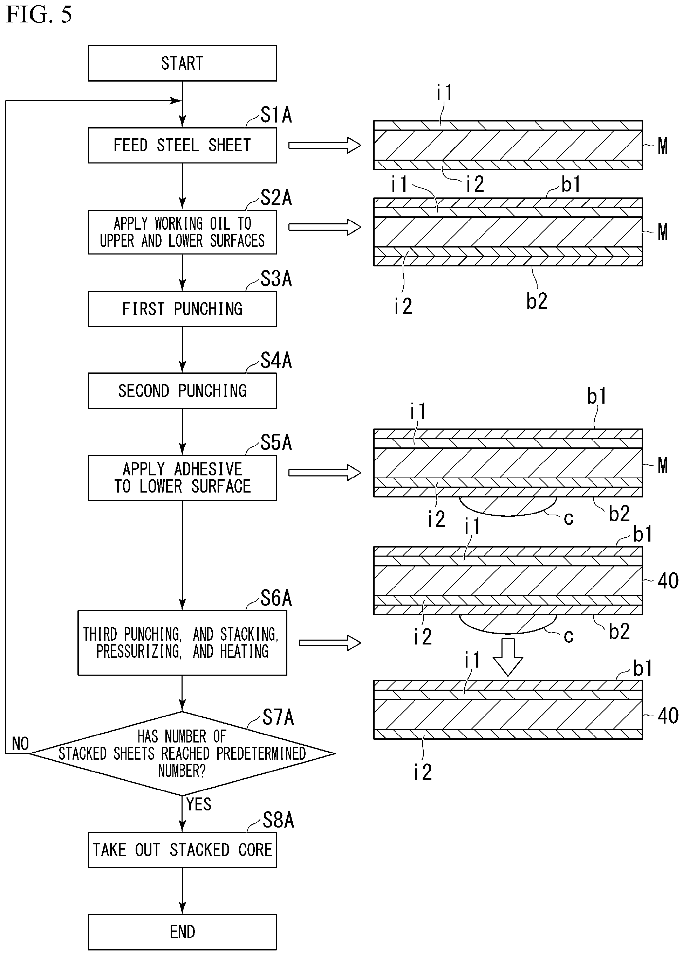

Note that, in the above embodiment, the case where the press working oil b2 is applied only to the lower surface of the strip-shaped steel sheet M has been described, but the present invention is not limited only to this form, and the press working oil b2 may be applied to both the upper surface and the lower surface of the strip-shaped steel sheet M. This modification example will be described below with reference to FIG. 5. In the present modification example, the insulating coating i1 to which a curing accelerator is added is formed on the upper surface of the strip-shaped steel sheet M, the insulating coating i2 to which a curing accelerator is added is formed on the lower surface of the strip-shaped steel sheet M, the press working oil b1 is applied to the upper surface of the strip-shaped steel sheet M, the press working oil b2 is applied to the lower surface of the strip-shaped steel sheet M, and the adhesive c is applied only to the lower surface of the strip-shaped steel sheet M.

As shown in FIG. 5, the bonded and stacked core manufacturing method according to the present modification example includes a steel sheet feeding step S1A, a working oil application step S2A, a first punching step S3A, a second punching step S4A, an adhesive application step S5A, a third punching and stacking step S6A, a stacked sheet number confirmation step S7A, and a taking-out step S8A.

Since the steel sheet feeding step S1A is the same as the steel sheet feeding step S1, description thereof is omitted.

In the subsequent working oil application step S2, the press working oil b1 is applied to the upper surface of the strip-shaped steel sheet M while the strip-shaped steel sheet M is sandwiched between the upper roller 131a and the lower roller 131b, and the press working oil b2 is applied to the lower surface of the strip-shaped steel sheet M. As a result, a layer of the press working oil b1 coating the entire surface of the insulating coating i1 is formed, and at the same time, a layer of the press working oil b2 coating the entire surface of the insulating coating i2 is formed. At this time, since the curing accelerator is retained in each of the solid insulating coatings i1 and i2, the curing accelerator is not mixed with the press working oils b1 and b2 to decrease a concentration, and substantially maintains the original state. Note that, for convenience of description, references b1 and b2 are used in order to distinguish the press working oils applied to the upper and lower surfaces of the strip-shaped steel sheet M from each other. However, these press working oils b1 and b2 have the same components and application thickness.

Since the subsequent first punching step S3A is the same as the first punching step S3, description thereof is omitted.

Since the subsequent second punching step S4A is the same as the second punching step S4, description thereof is omitted.

Since the subsequent adhesive application step SSA is the same as the adhesive application step S5, description thereof is omitted.

In the subsequent third punching and stacking step S6A, the electrical steel sheet 40 whose outer circumference has been punched from the strip-shaped steel sheet M by the outer circumferential punching male die 161 is stacked on an upper surface of another electrical steel sheet 40 that has been previously punched. On the upper surface of the other electrical steel sheet 40, the insulating coating i1 to which a curing accelerator is added and a film of the press working oil b1 applied onto the insulating coating i1 are formed. The electrical steel sheet 40 that has been subjected to outer circumferential punching this time is stacked on the other electrical steel sheet 40 and heated while being pressurized. Then, the adhesive c on the lower surface of the electrical steel sheet 40 that has been subjected to outer circumferential punching this time pushes away the press working oil b1 on the upper surface of the other electrical steel sheet 40 that has been previously subjected to outer circumferential punching, and is mixed with the curing accelerator in the insulating coating i1 under the press working oil b1. At the same time, the adhesive c pushes away the press working oil b2 on the lower surface of the electrical steel sheet 40 that has been subjected to outer circumferential punching this time and is mixed also with the curing accelerator in the insulating coating i2. In this manner, the adhesive c is instantaneously cured while being mixed with the curing accelerator included in each of the insulating coatings i1 and i2. At this time, since the curing accelerator can be mixed with the adhesive c while maintaining a concentration, a curing accelerating effect can be sufficiently exhibited.

By sequentially repeating the above steps, a predetermined number of electrical steel sheets 40 are stacked and bonded, and the stator bonded and stacked core 21 is completed.

Note that since the stacked sheet number confirmation step S7A is the same as the stacked sheet number confirmation step S7, description thereof is omitted.

Similarly, since the taking-out step S8A is the same as the taking-out step S8, description thereof is omitted.

### [Second Embodiment]

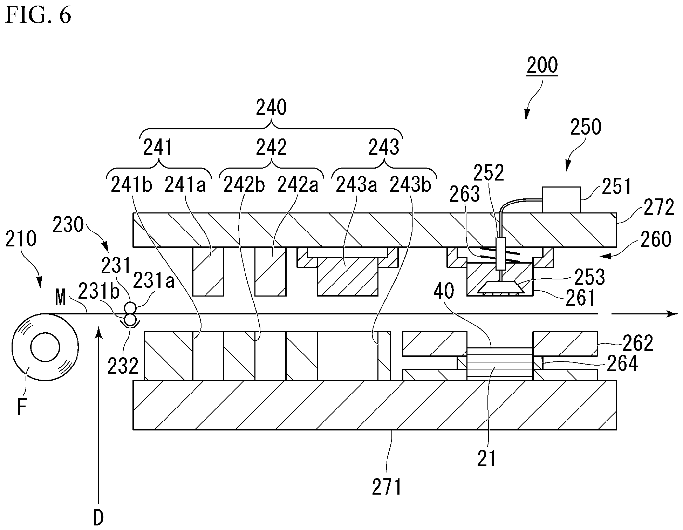

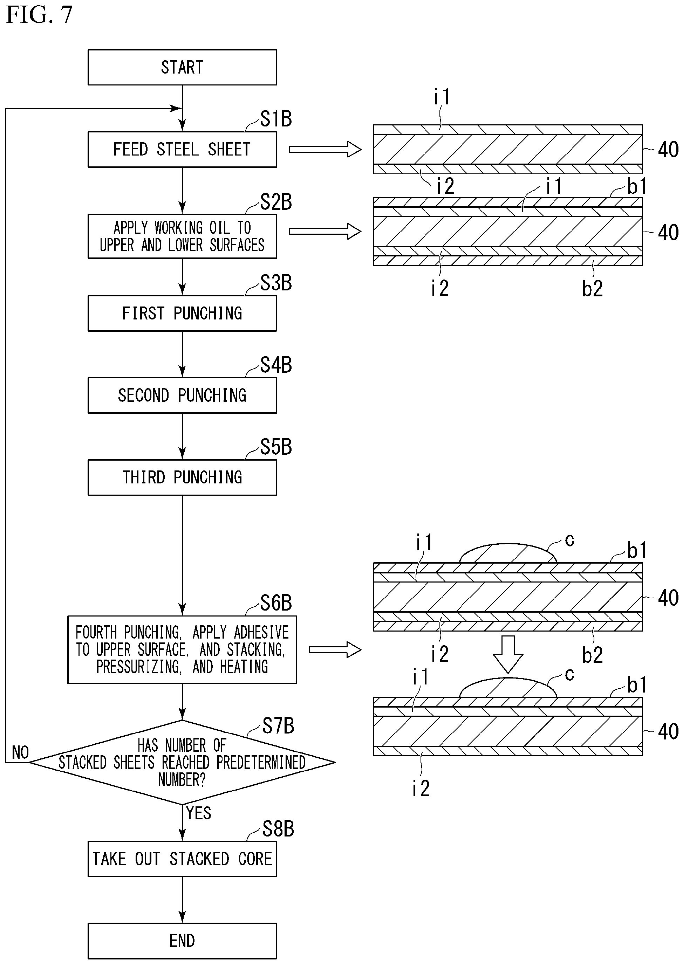

Next, a second embodiment of the present invention will be described below with reference to FIGS. 6 and 7. FIG. 6 is a side view of a bonded and stacked core manufacturing apparatus according to the present embodiment. FIG. 7 is a flowchart for explaining a bonded and stacked core manufacturing method according to the present embodiment.

As shown in FIG. 6, a bonded and stacked core manufacturing apparatus 200 of the present embodiment includes a strip-shaped steel sheet supply unit 210, a drive unit (not shown), a press working oil application unit 230, a press working unit 240, an adhesive application unit 250, and a stacking and bonding unit 260.

A hoop material F around which a strip-shaped steel sheet M to be a material of an electrical steel sheet (steel sheet component) 40 is wound is pivotally supported by the strip-shaped steel sheet supply unit 210, and the strip-shaped steel sheet M is fed toward the right side of FIG. 6. In the following description, the right side of a drawing, which is a feeding direction of the strip-shaped steel sheet M, may be referred to as a downstream side, and the left side of the drawing, which is the direction opposite thereto, may be referred to as an upstream side. The strip-shaped steel sheet M fed toward the downstream side from the strip-shaped steel sheet supply unit 210 is a steel sheet having the above-described chemical composition, and both surfaces (both an upper surface and a lower surface) of the strip-shaped steel sheet M are coated with the above-described insulating coatings. The above-described curing accelerator is previously added to the insulating coating. Therefore, in the strip-shaped steel sheet supply unit 210, on the upper and lower surfaces of the strip-shaped steel sheet M, the curing accelerator is present uniformly along the upper and lower surfaces in a state of being previously dried and sealed in the insulating coating.

The drive unit is disposed at a position D between the strip-shaped steel sheet supply unit 210 and the press working oil application unit 230. The drive unit intermittently feeds the strip-shaped steel sheet M in the right direction of the drawing from the strip-shaped steel sheet supply unit 210 toward the press working oil application unit 230. On the upper and lower surfaces of the strip-shaped steel sheet M fed from the strip-shaped steel sheet supply unit 210, the curing accelerator is uniformly present along each of the surfaces in a state of being previously dried and sealed in the insulating coating.

The press working oil application unit 230 includes an application roller 231 and an oil pan 232.

The oil pan 232 is disposed at a position below the strip-shaped steel sheet M and immediately below the application roller 231. The application roller 231 includes an upper roller 231a and a lower roller 231b.

The upper roller 231a is disposed immediately above the strip-shaped steel sheet M, and can be switched between a state of being in contact with the upper surface of the strip-shaped steel sheet M and a state of being separated from the upper surface of the strip-shaped steel sheet M by moving up and down. The upper roller 231a can supply press working oil supplied from a press working oil supply unit (not shown) to the upper surface of the strip-shaped steel sheet M by rolling while being in contact with the upper surface of the steel sheet M in a state where an outer circumferential surface of the upper roller 231a is impregnated with the press working oil.

The lower roller 231b is disposed immediately below the strip-shaped steel sheet M, and can be switched between a state of being in contact with the lower surface of the strip-shaped steel sheet M and a state of being separated from the lower surface of the strip-shaped steel sheet M by moving up and down. The lower roller 231b can supply press working oil supplied from the press working oil supply unit to the lower surface of the strip-shaped steel sheet M by rolling while being in contact with the lower surface of the steel sheet M in a state where an outer circumferential surface of the lower roller 231b is impregnated with the press working oil.

The oil pan 232 receives and collects excess press working oil dripping from the upper roller 231a and the lower roller 231b, and returns the excess press working oil to the press working oil supply unit.

According to the press working oil application unit 230, by supplying a press working oil from the press working oil supply unit in a state where the upper roller 231a is in contact with the upper surface of the strip-shaped steel sheet M, it is possible to continuously or intermittently feed the strip-shaped steel sheet M to the downstream side while forming a layer of the press working oil over the entire surface on the insulating coating on the upper surface of the strip-shaped steel sheet M.

Similarly, by supplying a press working oil from the press working oil supply unit in a state where the lower roller 231b is in contact with the lower surface of the strip-shaped steel sheet M, it is possible to continuously or intermittently feed the strip-shaped steel sheet M to the downstream side while forming a layer of the press working oil over the entire surface on the insulating coating on the lower surface of the strip-shaped steel sheet M.

Alternatively, by sandwiching the strip-shaped steel sheet M between the upper roller 231a and the lower roller 231b, it is possible to continuously or intermittently feed the strip-shaped steel sheet M to the downstream side while forming a layer of the press working oil over the entire surfaces on both the insulating coating on the upper surface of the strip-shaped steel sheet M and the insulating coating on the lower surface of the strip-shaped steel sheet M.

As described above, by moving the respective positions of the upper roller 231a and the lower roller 231b up and down as necessary, selection can be made from three cases of applying the press working oil only to the upper surface of the strip-shaped steel sheet M, applying the press working oil only to the lower surface of the strip-shaped steel sheet M, and applying the press working oil to both the upper surface and the lower surface of the strip-shaped steel sheet M.

Here, in any of the above cases, since the curing accelerator on the upper and lower surfaces of the strip-shaped steel sheet M is sealed in a dried state in the insulating coating before the press working oil is applied, a decrease in the concentration of the curing accelerator due to application of the press working oil is suppressed. Therefore, the concentration of the curing accelerator on the upper surface of the strip-shaped steel sheet M after application of the press working oil is maintained unchanged from the time of the hoop material F. Similarly, the concentration of the curing accelerator on the lower surface of the strip-shaped steel sheet M after application of the press working oil is also maintained unchanged from the time of the hoop material F. Therefore, the strip-shaped steel sheet M after passing through the press working oil application unit 230 is fed to the press working unit 240 while maintaining the concentrations of the curing accelerator on the upper and lower surfaces of the strip-shaped steel sheet M.

The press working unit 240 includes a first-stage punching unit 241, a second-stage punching unit 242, and a third-stage punching unit 243.

The first-stage punching unit 241 is disposed on the downstream side of the press working oil application unit 230 and includes a male die 241a and a female die 241b. The male die 241a and the female die 241b are coaxially disposed in the vertical direction, and the strip-shaped steel sheet M is inserted therebetween. Therefore, the male die 241a faces the upper surface of the strip-shaped steel sheet M, and the female die 241b faces the lower surface of the strip-shaped steel sheet M. Then, in a state where feeding of the strip-shaped steel sheet M is temporarily stopped, the male die 241a is moved downward to reach the inside of the female die 241b by a hydraulic mechanism (not shown), thereby performing first punching necessary for forming the electrical steel sheet 40 from the strip-shaped steel sheet M. At this time, since the press working oil is previously applied to the strip-shaped steel sheet M, punching can be performed without causing seizure or the like. After the punching, the male die 241a is moved upward to be pulled out from the female die 241b, and the strip-shaped steel sheet M is fed toward the downstream side again.

The second-stage punching unit 242 is disposed on the downstream side of the first-stage punching unit 241, and includes a male die 242a and a female die 242b. The male die 242a and the female die 242b are coaxially disposed in the vertical direction, and the strip-shaped steel sheet M after the first punching is inserted therebetween. Therefore, the male die 242a faces the upper surface of the strip-shaped steel sheet M, and the female die 242b faces the lower surface of the strip-shaped steel sheet M. Then, in a state where feeding of the strip-shaped steel sheet M is temporarily stopped again, the male die 242a is moved downward to reach the inside of the female die 242b by a hydraulic mechanism (not shown), thereby performing second punching necessary for forming the electrical steel sheet 40 from the strip-shaped steel sheet M. Also at this time, since the press working oil is previously applied to the upper and lower surfaces of the strip-shaped steel sheet M, punching can be performed without causing seizure or the like. After the punching, the male die 242a is moved upward to be pulled out from the female die 242b, and the strip-shaped steel sheet M is fed toward the downstream side again.

The third-stage punching unit 243 is disposed on the downstream side of the second-stage punching unit 242 and includes a male die 243a and a female die 243b. The male die 243a and the female die 243b are coaxially disposed in the vertical direction, and the strip-shaped steel sheet M after the second punching is inserted therebetween. Therefore, the male die 243a faces the upper surface of the strip-shaped steel sheet M, and the female die 243b faces the lower surface of the strip-shaped steel sheet M. Then, in a state where feeding of the strip-shaped steel sheet M is temporarily stopped again, the male die 243a is moved downward to reach the inside of the female die 243b by a hydraulic mechanism (not shown), thereby performing third punching necessary for forming the electrical steel sheet 40 from the strip-shaped steel sheet M. Also at this time, since the press working oil is previously applied to the upper and lower surfaces of the strip-shaped steel sheet M, punching can be performed without causing seizure or the like. After the punching, the male die 243a is moved upward to be pulled out from the female die 243b, and the strip-shaped steel sheet M is fed toward the downstream side again.

The strip-shaped steel sheet M that has passed through the press working unit 240 in this manner contains the curing accelerator still maintaining a high concentration on each of the upper and lower surfaces of the strip-shaped steel sheet M, and is fed to the adhesive application unit 250 as it is.

The adhesive application unit 250 is incorporated in the stacking and bonding unit 260 on the downstream side of the press working unit 240. The adhesive application unit 250 includes an air pressure feeder 251, a syringe 252, and a nozzle 253.

The syringe 252 is a container that stores an adhesive, and is connected between the air pressure feeder 251 and the nozzle 253 through a pipe. The adhesive described in the first embodiment can be used.

The nozzle 253 is disposed above the strip-shaped steel sheet M. Therefore, the ejection port of the nozzle 253 faces the upper surface of the strip-shaped steel sheet M.

The adhesive is applied onto a surface of the press working oil coating the insulating coating on the upper surface of the strip-shaped steel sheet M. Although the press working oil is liquid, since the insulating coating itself is solid, mixing of the press working oil with the curing accelerator added into the insulating coating is suppressed. Therefore, a state where the curing accelerator and the adhesive are separated from each other is maintained on the upper surface of the strip-shaped steel sheet M. As a result, the strip-shaped steel sheet M that has passed through the adhesive application unit 250 contains the curing accelerator still maintaining a high concentration on each of the upper and lower surfaces of the strip-shaped steel sheet M.

The stacking and bonding unit 260 is disposed on the downstream side of the press working unit 240 and at the same position as the adhesive application unit 250. The stacking and bonding unit 260 includes an outer circumferential punching male die 261, an outer circumferential punching female die 262, a spring 263, and a heater 264.

The outer circumferential punching male die 261 is a cylindrical die having a circular bottom surface, and a lower end of the spring 263 is connected to an upper end of the outer circumferential punching male die 261. The outer circumferential punching male die 261 can move up and down together with the spring 263 in a state of being supported by the spring 263. The outer circumferential punching male die 261 has an outer diameter dimension substantially the same as the outer diameter dimension of the stator bonded and stacked core 21. The nozzle 253 is incorporated in the outer circumferential punching male die 261. The ejection port of the nozzle 253 is formed on the bottom surface of the outer circumferential punching male die 261.

The outer circumferential punching female die 262 is a die having a cylindrical internal space, and has an inner diameter dimension substantially the same as the outer diameter dimension of the stator bonded and stacked core 21.

The heater 264 is integrally incorporated in the outer circumferential punching female die 262. The heater 264 heats the electrical steel sheets (steel sheet components) 40 stacked in the outer circumferential punching female die 262 from a circumference of the electrical steel sheets 40. When a thermosetting type is used as the adhesive, the adhesive is cured by receiving heat from the heater 264. On the other hand, when a room-temperature curing type is used as the adhesive, the adhesive is cured at room temperature without requiring heating.

According to the stacking and bonding unit 260, in a state where feeding of the strip-shaped steel sheet M is temporarily stopped, the outer circumferential punching male die 261 is lowered to sandwich the strip-shaped steel sheet M between the outer circumferential punching male die 261 and the outer circumferential punching female die 262, and the outer circumferential punching male die 261 is further pressed into the outer circumferential punching female die 262, whereby the electrical steel sheet 40 obtained by outer circumferential punching from the strip-shaped steel sheet M is obtained.

Furthermore, at the time of this outer circumferential punching, when the air pressure feeder 251 is activated to pressure-feed an appropriate amount of air to the syringe 252, the adhesive in the syringe 252 is fed to the nozzle 253. As a result, an appropriate amount of adhesive is ejected from the ejection port formed on the bottom surface of the outer circumferential punching male die 261 and applied to the upper surface of the strip-shaped steel sheet M. The adhesive applied here is used for bonding another electrical steel sheet 40 to be subjected to outer circumferential punching next and stacked.

The electrical steel sheet 40 that has been subjected to outer circumferential punching this time is stacked on an upper surface of another electrical steel sheet 40 punched last time and stacked and bonded in the outer circumferential punching female die 262.

Then, a pressurizing force from the outer circumferential punching male die 261 and heating from the heater 264 are applied to each of the stacked electrical steel sheets 40. At this time, the pressurizing force applied from the outer circumferential punching male die 261 to the electrical steel sheet 40 is maintained constant all the time by a biasing force of the spring 263.

Due to the pressurizing force at this time, the adhesive on an upper surface of the other electrical steel sheet 40 punched last time is instantaneously cured while being mixed with at least one of the curing accelerator in the insulating coating on a lower surface of the electrical steel sheet 40 that has been subjected to outer circumferential punching this time and the curing accelerator in the insulating coating on the upper surface of the other electrical steel sheet 40 punched last time.

As described above, the electrical steel sheet 40 punched this time is bonded and fixed to the upper surface of the other electrical steel sheet 40 punched last time. By repeating such steps of outer circumferential punching, pressurizing, and heating as many times as the number of stacked electrical steel sheets 40, the stator bonded and stacked core 21 is formed in the outer circumferential punching female die 262.

As shown in FIG. 6, the female die 241b, the female die 242b, the female die 243b, the outer circumferential punching female die 262, and the heater 264 are fixed onto a common fixing base 271. Therefore, relative positions of the female die 241b, the female die 242b, the female die 243b, the outer circumferential punching female die 262, and the heater 264 in the horizontal direction and the up-down direction are fixed.

Similarly, the male die 241a, the male die 242a, the male die 243a, the nozzle 253, and the outer circumferential punching male die 261 are also fixed to the lower surface of the common movable base 272. Therefore, relative positions of the male die 241a, the male die 242a, the nozzle 253, and the outer circumferential punching male die 261 in the horizontal direction and the up-down direction are also fixed.

The drive unit feeds the strip-shaped steel sheet M toward the downstream side, and lowers the movable base 272 when the drive unit temporarily stops the strip-shaped steel sheet M, whereby outer circumferential punching, stacking, and bonding of the electrical steel sheet 40, application of an adhesive to the electrical steel sheet 40 for the next step, the third punching to the position of the strip-shaped steel sheet M to be subjected to outer circumferential punching next, the second punching to the position of the strip-shaped steel sheet M to be subjected to the third punching next, and the first punching to the position of the strip-shaped steel sheet M to be subjected to the second punching next are simultaneously performed.

Subsequently, the movable base 272 is raised and retracted above the strip-shaped steel sheet M, and then the strip-shaped steel sheet M is fed again toward the downstream side by a predetermined distance by the drive unit and temporarily stopped again. In this state, the movable base 272 is lowered again, and working at each position is continuously performed. As described above, the step of moving the movable base 272 up and down during a temporary stop while intermittently feeding the strip-shaped steel sheet M by the drive unit is repeated, whereby the stator bonded and stacked core 21 is manufactured.

A bonded and stacked core manufacturing method using the bonded and stacked core manufacturing apparatus 200 having the above-described constitution will be described below with reference to FIG. 7. In the present embodiment, a case where an insulating coating to which a curing accelerator is added is formed on each of upper and lower surfaces of the strip-shaped steel sheet M, a press working oil is applied to each of the upper and lower surfaces of the strip-shaped steel sheet M, and an adhesive is applied only to the upper surface of the strip-shaped steel sheet M will be exemplified.

As shown in FIG. 7, the bonded and stacked core manufacturing method of the present embodiment includes a steel sheet feeding step S1B, a working oil application step S2B, a first punching step S3B, a second punching step S4B, a third punching step S5B, a fourth punching and stacking step S6B, a stacked sheet number confirmation step S7B, and a taking-out step S8B.

A curing accelerator is added to both the inside of an insulating coating i1 coating the upper surface of the strip-shaped steel sheet M and the inside of an insulating coating i2 coating the lower surface of the strip-shaped steel sheet M. Note that, for convenience of description, references i1 and i2 are used in order to distinguish the insulating coatings on the upper and lower surfaces of the strip-shaped steel sheet M from each other. However, these insulating coatings i1 and i2 have the same components and thickness.

In the subsequent working oil application step S2B, the press working oils b1 and b2 are applied to the upper and lower surfaces of the strip-shaped steel sheet M while the strip-shaped steel sheet M is sandwiched between the upper roller 231a and the lower roller 231b in the up-down direction. As a result, a layer of the press working oil b1 coating the entire surface of the insulating coating i1 is formed. In addition, a layer of the press working oil b2 coating the entire surface of the insulating coating i2 is formed. At this time, the curing accelerator is retained in each of the solid insulating coatings i1 and i2. Therefore, the curing accelerator in the insulating coating i1 is not mixed with the press working oil b1 to decrease a concentration, and substantially maintains the original state. Similarly, the curing accelerator in the insulating coating i2 is not mixed with the press working oil b2 to decrease a concentration, and substantially maintains the original state.

In the subsequent first punching step S3B, first punching of the strip-shaped steel sheet M is performed by the first-stage punching unit 241. At this time, since the press working oils b1 and b2 are previously applied to the strip-shaped steel sheet M, a defect in press working such as seizure between the male die 241a and the female die 241b does not occur.

In the subsequent second punching step S4B, second punching of the strip-shaped steel sheet M is performed by the second-stage punching unit 242. Also at this time, since the press working oils b1 and b2 are previously applied to the strip-shaped steel sheet M, a defect in press working such as seizure between the male die 242a and the female die 242b does not occur.

In the subsequent third punching step S5B, third punching of the strip-shaped steel sheet M is performed by the third-stage punching unit 243. Also at this time, since the press working oils b1 and b2 are previously applied to the strip-shaped steel sheet M, a defect in press working such as seizure between the male die 243a and the female die 243b does not occur.

Through the first punching step S3B to the third punching step S5B described above, the core back portion 22 and the tooth portion 23 shown in FIG. 1 are formed in the strip-shaped steel sheet M except for an outer shape portion.

In the subsequent fourth punching and stacking step S6B, the electrical steel sheet 40 whose outer circumference has been punched from the strip-shaped steel sheet M by the outer circumferential punching male die 261 is stacked on an upper surface of another electrical steel sheet 40 that has been subjected to outer circumferential punching last time. On the upper surface of the other electrical steel sheet 40, the insulating coating i1 to which the curing accelerator is added, the press working oil b1 coating the insulating coating i1, and the adhesive c that that has been applied last time onto the press working oil b1 are formed in this order. On the lower surface of the electrical steel sheet 40 that has been subjected to outer circumferential punching this time, the insulating coating i2 to which the curing accelerator is added and the press working oil b2 coating the insulating coating i2 are formed in this order.

The electrical steel sheet 40 that has been subjected to outer circumferential punching this time is heated while being pressurized in a state of being stacked on the upper surface of the other electrical steel sheet 40 that has been subjected to outer circumferential punching last time. Then, the adhesive c on the upper surface of the other electrical steel sheet 40 that has been subjected to outer circumferential punching last time pushes away the press working oil b1 on the upper surface of the other electrical steel sheet 40 that has been subjected to outer circumferential punching last time, and is mixed with the curing accelerator in the insulating coating i1. At the same time, the adhesive c pushes away the press working oil b2 on the lower surface of the electrical steel sheet 40 that has been subjected to outer circumferential punching this time and is mixed also with the curing accelerator in the insulating coating i2. In this manner, the adhesive c is instantaneously cured while being mixed with the curing accelerator included in each of the insulating coatings i1 and i2. As described above, since the curing accelerator can be mixed with the adhesive c while maintaining a concentration, a curing accelerating effect can be sufficiently exhibited.

On the other hand, the electrical steel sheet 40 that has been subjected to outer circumferential punching this time is stacked on the other electrical steel sheet 40, and at the same time, the adhesive c is applied from the nozzle 253 to the upper surface of the electrical steel sheet 40 that has been subjected to outer circumferential punching this time. Since the adhesive c is present on the upper surface of the electrical steel sheet 40 and has not been mixed with the curing accelerator yet, the adhesive c is in a liquid form.

By sequentially repeating the above steps, a predetermined number of electrical steel sheets 40 are stacked and bonded, and the stator bonded and stacked core 21 is completed.

That is, in the stacked sheet number confirmation step S7B, it is determined whether or not the number of stacked electrical steel sheets 40 has reached a predetermined number. As a result, if the number has not reached the predetermined number (determination: NO), the flow returns to the steel sheet feeding step S1B, and the steel sheet feeding step S1B to the fourth punching and stacking step S6B are repeated again. On the other hand, if the number has reached the predetermined number in the stacked sheet number confirmation step S7B (determination: YES), the flow proceeds to the taking-out step S8B.

In the subsequent taking-out step S8B, the completed stator bonded and stacked core 21 is taken out from the outer circumferential punching female die 262, whereby all the steps of the bonded and stacked core manufacturing method are completed.

The gist of the bonded and stacked core manufacturing method using the bonded and stacked core manufacturing apparatus 100 described above will be summarized below.

In the present embodiment, among the gist of the above (1) to (4) described in the first embodiment, the gist of the following (5) is adopted instead of the gist of the above (4).

(5) In the bonded and stacked core manufacturing method described in (3), the following is adopted.

Each electrical steel sheet 40 includes a subsequently punched electrical steel sheet (third steel sheet component) 40 and a punched electrical steel sheet (fourth steel sheet component) 40 that has been previously subjected to outer circumferential punching. This bonded and stacked core manufacturing method includes: a fourth step of preparing a subsequently punched electrical steel sheet (third steel sheet component) 40 having the insulating coating i2 and the press working oil b2 applied onto the insulating coating i2 on a lower surface (third surface) thereof; a fifth step of preparing, on an upper surface (fourth surface) thereof, an electrical steel sheet (fourth steel sheet component) 40 that has been previously subjected to outer circumferential punching, including the insulating coating i1, the press working oil b1 applied onto the insulating coating i1, and the adhesive c applied onto the press working oil bl; a sixth step of superimposing and bonding the previously punched electrical steel sheet (fourth steel sheet component) 40 and the subsequently punched electrical steel sheet (third steel sheet component) 40 such that the lower surface (third surface) and the upper surface (fourth surface) face each other.

According to the bonded and stacked core manufacturing method described in (5), before the sixth step, the curing accelerator is previously dried and sealed in each of the insulating coatings il and i2, and therefore mixing of the curing accelerator with the press working oils b1 and b2 is suppressed. Therefore, in the sixth step, when the previously punched electrical steel sheet (fourth steel sheet component) 40 and subsequently punched electrical steel sheet (third steel sheet component) 40 are superimposed and bonded, the curing accelerator can be mixed with the adhesive c while maintaining a high concentration.

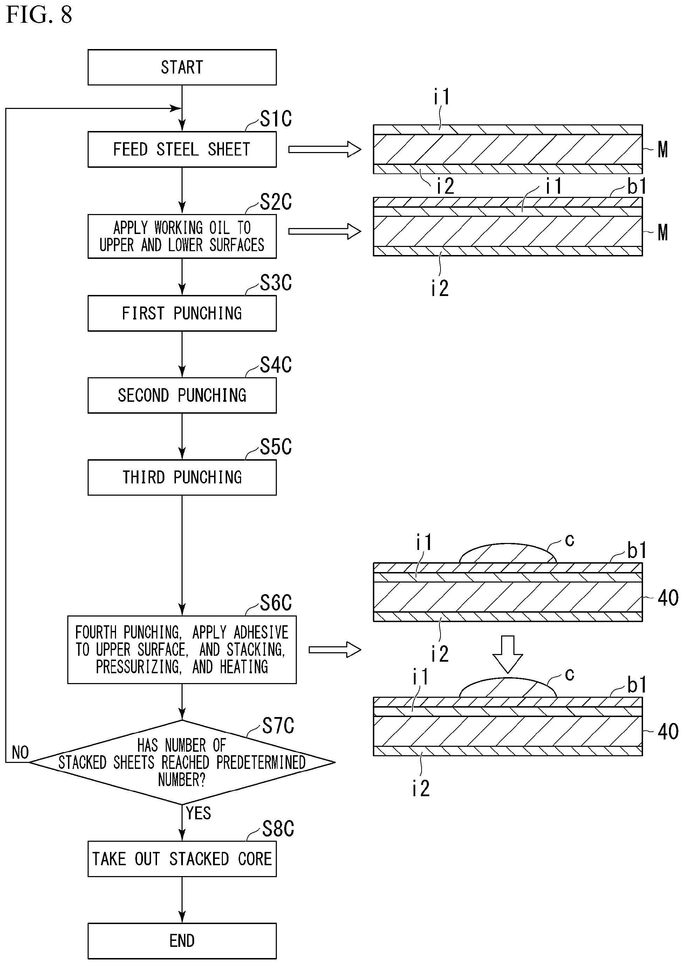

Note that, in the above embodiment, the case where the press working oils b1 and b2 are applied to the upper and lower surfaces of the strip-shaped steel sheet M has been described, but the present invention is not limited only to this form, and the press working oil b1 may be applied only to the upper surface of the strip-shaped steel sheet M. This modification example will be described below with reference to FIG. 8. In the present modification example, the insulating coating il to which a curing accelerator is added is formed on the upper surface of the strip-shaped steel sheet M, the insulating coating i2 to which a curing accelerator is added is formed on the lower surface of the strip-shaped steel sheet M, the press working oil bl is applied to the upper surface of the strip-shaped steel sheet M, the press working oil b2 is not applied to the lower surface of the strip-shaped steel sheet M, and the adhesive c is applied only to the upper surface of the strip-shaped steel sheet M.

As shown in FIG. 8, the bonded and stacked core manufacturing method according to the present modification example includes a steel sheet feeding step S1C, a working oil application step S2C, a first punching step S3C, a second punching step S4C, a third punching step S5C, a fourth punching and stacking step S6C, a stacked sheet number confirmation step S7C, and a taking-out step S8C.

Since the steel sheet feeding step S1C is the same as the steel sheet feeding step S1B, description thereof is omitted.

In the subsequent working oil application step S2C, only the press working oil b1 is applied while the upper roller 231a is in contact with the upper surface of the strip-shaped steel sheet M. As a result, a layer of the press working oil b1 coating the entire surface of the insulating coating i1 is formed, whereas the press working oil b2 is not applied to the insulating coating i2. At this time, since the curing accelerator is retained in the solid insulating coating i1, the curing accelerator is not mixed with the press working oil b1 to decrease a concentration, and substantially maintains the original state.

Since the subsequent first punching step S3C is the same as the first punching step S3B, description thereof is omitted.

Since the subsequent second punching step S4C is the same as the second punching step S4B, description thereof is omitted.

Since the subsequent third punching step SSC is the same as the third punching step S5B, description thereof is omitted.

In the subsequent fourth punching and stacking step S6C, the electrical steel sheet 40 whose outer circumference has been punched from the strip-shaped steel sheet M by the outer circumferential punching male die 261 is stacked on an upper surface of another electrical steel sheet 40 that has been subjected to outer circumferential punching last time. On the upper surface of the other electrical steel sheet 40, the insulating coating i1 to which the curing accelerator is added, the press working oil b1 coating the insulating coating i1, and the adhesive c that that has been applied last time onto the press working oil b1 are formed in this order. On the lower surface of the electrical steel sheet 40 that has been subjected to outer circumferential punching this time, only the insulating coating i2 to which a curing accelerator is added is formed. The electrical steel sheet 40 that has been subjected to outer circumferential punching this time is heated while being pressurized in a state of being stacked on the upper surface of the other electrical steel sheet 40 that has been subjected to outer circumferential punching last time. Then, the adhesive c on the upper surface of the other electrical steel sheet 40 that has been subjected to outer circumferential punching last time pushes away the press working oil b1 on the upper surface of the other electrical steel sheet 40 that has been subjected to outer circumferential punching last time, and is mixed with the curing accelerator in the insulating coating i1. At the same time, the adhesive c is mixed also with the curing accelerator in the insulating coating i2 on the lower surface of the electrical steel sheet 40 that has been subjected to outer circumferential punching this time. In this manner, the adhesive c is instantaneously cured while being mixed with the curing accelerator included in each of the insulating coatings i1 and i2. At this time, since the curing accelerator can be mixed with the adhesive c while maintaining a concentration, a curing accelerating effect can be sufficiently exhibited.

On the other hand, the electrical steel sheet 40 that has been subjected to outer circumferential punching this time is stacked on the other electrical steel sheet 40, and at the same time, the adhesive c is applied from the nozzle 253 to the upper surface of the electrical steel sheet 40 that has been subjected to outer circumferential punching this time. Since the adhesive c is present on the upper surface of the electrical steel sheet 40 and has not been mixed with the curing accelerator yet, the adhesive c is in a liquid form.

By sequentially repeating the above steps, a predetermined number of electrical steel sheets 40 are stacked and bonded, and the stator bonded and stacked core 21 is completed.

Note that since the stacked sheet number confirmation step S7C is the same as the stacked sheet number confirmation step S7B, description thereof is omitted.

Similarly, since the steel sheet feeding step S8C is the same as the taking-out step S8B, description thereof is omitted.

The embodiments and modification examples of the present invention have been described above. Note that the technical scope of the present invention is not limited only to the above-described embodiments and the above-described modification examples, and various modification can be made without departing from the gist of the present invention.

For example, the shape of the stator bonded and stacked core 21 is not limited only to the forms described in the embodiments. Specifically, the dimensions of the outer diameter and the inner diameter of the stator bonded and stacked core 21, the stacking thickness, the number of slots, a dimensional proportion between a circumferential direction and a radial direction of the tooth portion 23, a dimensional proportion between the tooth portion 23 and the core back portion 22 in a radial direction, and the like can be arbitrarily designed according to desired characteristics of the rotary electric machine.

In the rotor 30 in each of the embodiments, the pair of permanent magnets 32 forms one magnetic pole, but an object to be manufactured by the present invention is not limited only to this form. For example, one permanent magnet 32 may form one magnetic pole, and three or more permanent magnets 32 may form one magnetic pole.

In the embodiments, the permanent magnet field type electric motor has been described as an example of the rotary electric machine 10, but the structure of the rotary electric machine 10 is not limited only thereto as exemplified below, and furthermore, various known structures not exemplified below can also be adopted.

In the embodiments, the permanent magnet field type electric motor has been described as an example of the rotary electric machine 10, but the present invention is not limited only thereto. For example, the rotary electric machine 10 may be a reluctance type electric motor or an electromagnetic field type electric motor (winding field type electric motor).

In the embodiments, the synchronous motor has been described as an example of the AC electric motor, but the present invention is not limited thereto. For example, the rotary electric machine 10 may be an induction electric motor.

In the embodiments, the AC electric motor has been described as an example of the rotary electric machine 10, but the present invention is not limited thereto. For example, the rotary electric machine 10 may be a DC electric motor.

In the embodiments, the electric motor has been described as an example of the rotary electric machine 10, but the present invention is not limited thereto. For example, the rotary electric machine 10 may be a generator.

In addition, it is possible to appropriately replace the constituent elements in the embodiments with well-known constituent elements without departing from the gist of the present invention, and the above-described modification examples may be appropriately combined with each other.

### [Examples]

First, coating components of Nos. 1 to 13 presented in Table 1 below were prepared.

Then, any of the coating components of Nos. 7 to 11, which are compounds having a curing accelerating action of an anaerobic adhesive, was previously dried, and then added to the coating components of Nos. 1 to 5, which are insulating coating components, to prepare an insulating coating solution. Then, pure water was appropriately added to the insulating coating solution and stirred to adjust a concentration, thereby obtaining a treatment liquid for forming an insulating coating. The contents in the treatment liquid for forming an insulating coating are presented in Table 1.

Similarly, either of coating components of Nos. 12 and 13, which are compounds having no curing accelerating action of an anaerobic adhesive, was added to the coating components of Nos. 1 to 5, which are insulating coating components, to prepare an insulating coating solution. Then, pure water was appropriately added to the insulating coating solution and stirred to adjust a concentration, thereby obtaining a treatment liquid for forming an insulating coating. The contents in the treatment liquid for forming an insulating coating are presented in Table 1.

**[Table 1]**

| Number | Coating component (substance name) | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|---|
| 1 | Aluminum phosphate | Insulating coating inorganic component | 75 | 40 | 30 | 0 | 0 | 80 | 0 | 0 | 70 |
| 2 | Magnesium phosphate | Insulating coating inorganic component | 0 | 0 | 30 | 0 | 0 | 0 | 0 | 0 | 0 |
| 3 | Zinc phosphate | Insulating coating inorganic component | 0 | 50 | 22 | 0 | 0 | 0 | 0 | 0 | 0 |
| 4 | Acrylic resin | Insulating coating organic component | 20 | 6 | 0 | 25 | 50 | 17 | 70 | 50 | 17 |
| 5 | Epoxy resin | Insulating coating organic component | 0 | 0 | 14 | 0 | 30 | 0 | 30 | 30 | 0 |
| 6 | Ethylene glycol | Insulating coating additive | 3 | 3 | 3.6 | 5 | 0 | 3 | 0 | 0 | 3 |
| 7 | Vanadium pentoxide | Curing accelerating component | 2 | 0 | 0 | 0 | 0 | 0 | 0 | 0 | 0 |
| 8 | Manganese naphthenate | Curing accelerating component | 0 | 1 | 0 | 0 | 0 | 0 | 0 | 0 | 0 |
| 9 | Copper hexanoate | Curing accelerating component | 0 | 0 | 0.4 | 0 | 0 | 0 | 0 | 0 | 0 |
| 10 | Magnesium chromate | Coating component having curing accelerating function | 0 | 0 | 0 | 70 | 0 | 0 | 0 | 0 | 0 |
| 11 | Iron oxide | Coating component having curing accelerating function | 0 | 0 | 0 | 0 | 20 | 0 | 0 | 0 | 0 |
| 12 | Silica | Coating component having no curing accelerating function | 0 | 0 | 0 | 0 | 0 | 0 | 0 | 20 | 0 |
| 13 | Nickel oxide | Metal element having no curing accelerating | 0 | 0 | 0 | 0 | 0 | 0 | 0 | 0 | 10 |
| | | function | | | | | | | | | |
| Total \| | | | 100 | 100 | 100 | 100 | 100 | 100 | 100 | 100 | 100 |

| | | | | | | | | | | | |
|---|---|---|---|---|---|---|---|---|---|---|---|
| *Unit in Table is mass% | | | | | | | | | | | |

On the other hand, a plurality of non-oriented electrical steel sheets containing 3.1% of Si, 0.6% of Al, and 0.1% of Mn in terms of average mass%, with the remainder being Fe and impurities, and having an average sheet thickness of 0.30 mm and an average surface roughness Ra (center line average roughness) in each of an L direction and a C direction of 0.28 µm was prepared. Then, the treatment liquid for forming an insulating coating was applied to a surface of each of these non-oriented electrical steel sheets with a roll coater such that an average application amount was 1.2 g/m². Thereafter, the non-oriented electrical steel sheet was baked in a heating furnace at 500°C for 60 seconds such that the sheet temperature of the non-oriented electrical steel sheet was 200°C or 350°C to form an insulating coating. By the way, it is conceivable that a preferable application amount of the treatment liquid in the step of forming the insulating coating is within a range of 0.4 g/m² to 2.0 g/m² as an average value. In addition, it is conceivable that the sheet temperature of the non-oriented electrical steel sheet in the heating furnace is within a range of 140°C to 330°C. Furthermore, it is conceivable that the baking time of the non-oriented electrical steel sheet in the heating furnace is within a range of 15 seconds to 60 seconds.

Note that the treatment liquid was prepared such that the solid content in the coating was predetermined parts by mass in Table 1 as each of the coating components of Nos. 7 to 11, which are compounds having a curing accelerating action presented in Table 1. Note that, in some cases, a dispersant such as a surfactant was also appropriately used.

A similar treatment was performed for Nos. 12 and 13, which are compounds not having a curing accelerating action of an anaerobic adhesive.

By the way, in preparation of the treatment liquid, it is conceivable that the content of the compound with respect to 100 parts by mass of water and solvent is within a range of 0.2 parts by mass to 20 parts by mass.

Subsequently, for each of Examples 1 to 5 and Comparative Examples 1 to 4, initial bonding strength, final bonding strength, and insulation performance were examined. Results thereof are presented in Table 2 below.

**[Table 2]**

| Characteristics | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|
| Initial bonding strength after 20 seconds (MPa) | 3 | 2 | 3 | 1 | 5 | Not bonded | 0.3 | 0.1 | 0.5 |
| Final bonding strength after 24 hours (MPa) | 10 | 12 | 11 | 7 | 14 | 4 | 3 | 4 | 7 |
| 100 sheets-stacked core taking-out time (seconds) | 8 | 12 | 14 | 18 | 14 | 300 | 180 | 180 | 50 |
| Surface insulation resistance of insulating coating (Ω-cm²/sheet) | 14 | 18 | 29 | 27 | 64 | 54 | 45 | 23 | 9 |
| Overall evaluation | Good | Good | Good | Good | Good | Bad | Bad | Bad | Not Good |

In Table 2, in evaluation of the initial bonding strength and the final bonding strength, first, a sample piece of 30 mm × 60 mm was prepared. Then, a punching oil was previously applied to the entire surface of the sample piece. Thereafter, 5 µl of an anaerobic adhesive was dropped onto an end portion of the surface of the sample piece to which the punching oil had been applied within a range of 30 mm × 10 mm to form a bonding surface. Then, immediately after the anaerobic adhesive was dropped, another non-oriented electrical steel sheet was superimposed on the bonding surface of the sample piece.

The bonding strength was measured after retention at a pressure of 0.3 MPa for 20 seconds from start of the superimposition, and the measured value was defined as the initial bonding strength. Then, the bonding strength was measured after standing for 24 hours from the start of superimposition, and the measured value was defined as the final bonding strength.

In addition to evaluation of the initial bonding strength and the final bonding strength, taking-out time at the time of stacking 100 sheets was also evaluated as presented in Table 2.

That is, for the "100 sheets-stacked core taking-out time" presented in Table 2, first, a non-oriented electrical steel sheet having an insulating coating of the coating components presented in Table 1 was processed into a plurality of ring-shaped sample pieces having an outer diameter of 60 mm and an inner diameter of 40 mm using a die. Then, a punching oil was applied to each surface of these sample pieces, and then 5 µl of an anaerobic adhesive was applied to each of four portions of each surface. Then, immediately after the anaerobic adhesive was applied, each of these sample pieces was stacked on another sample piece. Such stacking was repeated at a stacking rate of 20 spm, and as a result, 100 sample pieces were stacked to obtain a stacked core. The shortest time from a measurement start time point at which the stacking of the stacked core thus obtained was completed to a measurement end time point at which the stacked core thus obtained could be taken out without deviation was defined as "100 sheets-stacked core taking-out time".

Furthermore, in order to confirm that the insulation performance by the insulating coating was sufficiently ensured in the non-oriented electrical steel sheet in a single sheet state before the above-described 100 sheet-stacked core was formed, surface insulation resistance presented in Table 2 was also measured. This measurement was performed by a method of JIS C 2550. Then, when a numerical value of the surface insulation resistance was within a range of 10 Ω-cm²/sheet or more, it was determined that necessary and sufficient insulation performance was ensured.

In Table 2, as for the initial bonding strength, a sample piece having bonding strength of 1 MPa or more was evaluated as Good (acceptable), a sample piece having bonding strength of less than 0.1 MPa was evaluated as Bad (not acceptable), and a sample piece having bonding strength therebetween was evaluated as Not Good. As for the final bonding strength, bonding strength was measured after the test piece after bonding was retained for 24 hours in a state where a pressure of 0.5 MPa was applied to the test piece. Then, as a result of the measurement, a sample piece having bonding strength of 5 MPa or more was evaluated as Good (acceptable), and a sample piece having bonding strength of less than 5 MPa was evaluated as Bad (not acceptable).

On the other hand, regarding the "100 sheets-stacked core taking-out time", a sample piece having 100 sheets-stacked core taking-out time of 20 seconds or less was evaluated as Good (acceptable), a sample piece having 100 sheets-stacked core taking-out time of 60 seconds or more was evaluated as Bad (not acceptable), and a sample piece having 100 sheets-stacked core taking-out time therebetween was evaluated as Not Good.

Under the above evaluation results, a sample piece that was evaluated as Good in all the evaluation items was evaluated as Good in overall evaluation, a sample piece including at least one Not Good was evaluated as Not Good in overall evaluation, and a sample piece including at least one Bad was evaluated as Bad in overall evaluation.

As presented in Table 2, Good in overall evaluation was obtained in all of Examples 1 to 5, whereas Bad in overall evaluation was obtained in Comparative Examples 1 to 3, and Not Good in overall evaluation was obtained in Comparative Example 4.

Note that, in all of Examples 1 to 5 for which "Good" was obtained in overall evaluation, the numerical values of the surface insulation resistance satisfied 10 Ω-cm²/sheet or more, and therefore it was also confirmed that sufficient insulation performance was obtained.

From the above, it was confirmed that by using an electrical steel sheet in which an insulating coating containing a curing accelerator was formed on one surface or both surfaces thereof, higher productivity could be obtained while sufficient bonding strength was ensued in manufacture of a bonded and stacked core. In addition, it was also confirmed that sufficiently high insulation performance was ensured even when a curing accelerator was added to the insulating coating.

According to a general idea, it is considered that addition of the curing accelerator may affect insulation performance of the insulating coating, and such a composition is avoided. Similarly, according to a general idea, it is not considered to enhance a bonding action using the curing accelerator while a so-called "dirt layer" such as a press working oil remains on the insulating coating. In the first place, since the curing accelerator is an organic resin, if it is tried to cause the curing accelerator to be contained in something, it is a general idea to mix the curing accelerator with an organic resin.

However, the present inventors have adopted a composition in which the curing accelerator that is an organic resin is previously dried and then contained in the insulating coating that is an inorganic substance. Then, as described in the above Examples, the present inventors have found that when this composition is used, a high bonding action can be obtained while necessary and sufficient insulation performance is ensured, leading to the present invention.

### [Field of Industrial Application]

According to each of the above aspects of the present invention, it is possible to provide an electrical steel sheet and a bonded and stacked core manufacturing method capable of obtaining higher productivity while ensuring sufficient bonding strength in manufacture of a bonded and stacked core. Therefore, industrial applicability is significant.

### [Brief Description of the Reference Symbols]

21 Stator bonded and stacked core (bonded and stacked core, stator for rotary electric machine)
40 Electrical steel sheet, Steel sheet component, First steel sheet component, Second steel sheet component, Third steel sheet component, Fourth steel sheet component
b1, b2 Press working oil
C Adhesive
i1, i2 Insulating coating
M Strip-shaped steel sheet, Electrical steel sheet

## Claims

1. An electrical steel sheet comprising: as a chemical composition, in a unit of mass%,
2.5% to 3.9% of Si;
0.001% to 3.0% of Al; and
0.05% to 5.0% of Mn,
the remainder being Fe and impurities, wherein
on one surface or both surfaces thereof, an insulating coating containing a curing accelerator is formed.

2. The electrical steel sheet according to claim 1, wherein the curing accelerator contains an active component that accelerates anaerobic curing, selected from titanium, chromium, manganese, iron, cobalt, nickel, copper, zinc, silver, vanadium, molybdenum, ruthenium, and combinations thereof.

3. A bonded and stacked core manufacturing method for manufacturing a bonded and stacked core by performing press working on a strip-shaped steel sheet with a press working oil applied to one surface or both surfaces thereof, applying an adhesive to the one surface of the strip-shaped steel sheet to obtain a plurality of steel sheet components, and stacking and bonding the steel sheet components, wherein
the electrical steel sheet according to claim 1 or 2 is used as the strip-shaped steel sheet.

4. The bonded and stacked core manufacturing method according to claim 3, wherein
the steel sheet components include a first steel sheet component and a second steel sheet component, and
the method comprises:
a first step of preparing the first steel sheet component including the insulating coating on a first surface;
a second step of preparing the second steel sheet component including the insulating coating, the press working oil applied onto the insulating coating, and the adhesive applied onto the press working oil on a second surface; and
a third step of superimposing and bonding the first steel sheet component and the second steel sheet component such that the first surface and the second surface face each other.

5. The bonded and stacked core manufacturing method according to claim 3, wherein
the steel sheet components include a third steel sheet component and a fourth steel sheet component, and
the method comprises:
a fourth step of preparing the third steel sheet component including the insulating coating and the press working oil applied onto the insulating coating on a third surface;
a fifth step of preparing the fourth steel sheet component including the insulating coating, the press working oil applied onto the insulating coating, and the adhesive applied onto the press working oil on a fourth surface; and
a sixth step of superimposing and bonding the third steel sheet component and the fourth steel sheet component such that the third surface and the fourth surface face each other.

6. The bonded and stacked core manufacturing method according to any one of claims 3 to 5, wherein the bonded and stacked core is a stator for a rotary electric machine.
